# EUROPEAN PATENT APPLICATION

(11) **EP 2 933 026 A1**
(43) Date of publication of application: **21.10.2015**
(21) Application number: 15164187.5
(22) Date of filing: 20.04.2015
(51) Int. Cl.: B05C 11/10, B29B 13/02

(54) **FILL SYSTEM AND METHOD USING STORAGE CONTAINER WITH ROTARY SIFTER PLATE FOR ADHESIVE SOLIDS**

(30) Priority: 18.04.2014 US 201461981222 P; 14.04.2015 US 201514685754
(71) Applicant: Nordson Corporation, Westlake, OH 44145-1119 (US)
(72) Inventor: Ganzer, Charles P., Cumming, GA Georgia 30041 (US); Ramosevac, Enes, Snellville, GA Georgia 30039 (US)
(74) Representative: Eisenführ Speiser

(57) **Abstract**

A fill system retains and transfers adhesive solids of different types and compositions to adhesive melter(s). The fill system (10) includes a storage container (12) for holding a bulk supply of adhesive solids and a separating element such as a sifter plate (30) for moving relative to one of the surfaces of the bulk supply. A drive (80) rotates or otherwise moves the sifter plate (30) against the surface of the bulk supply to separate a flow of fluidized adhesive solids from the bulk supply and then controllably deliver this flow to one or more pumps (20) feeding the melter(s). When the drive stops rotating the sifter plate, the flow of fluidized adhesive solids is stopped from moving out of the storage container. Thus, the fill system (10) provides adhesive solids on demand to pumps (20) and reduces the risk of pumps being starved for air or clogged with coalesced masses of adhesive.

## Description

### Cross-Reference to Related Application

This application is a non-provisional application claiming the priority of U.S. Provisional Patent Application No. 61/981,222, filed on April 18, 2014 (pending), the disclosure of which is incorporated by reference herein in its entirety.

### Technical Field

The present invention relates generally to hot melt adhesive systems, and more particularly, to fill systems for temporarily storing and transferring unmelted hot melt adhesive solids to pumps that feed melters or dispenser devices.

### Background

Hot melt adhesive systems have many applications in manufacturing and packaging. For example, thermoplastic hot melt adhesives are used for carton and case sealing, tray forming, pallet stabilization, nonwoven applications including diaper manufacturing, and many other applications. Hot melt adhesives are typically produced in the form of adhesive "solids," which include solid or semi-solid pellets and/or particulates. These hot melt adhesive solids are transferred to a melter where the hot melt adhesive solids are melted into a molten liquid form at a desired application temperature. The liquid hot melt adhesive is ultimately dispensed at the application temperature to an object such as a work piece, substrate or product by a dispensing device suitable to the manufacturing or packaging application.

In these hot melt adhesive systems, a supply of unmelted hot melt adhesive solids must be retained and transferred to the melter in order for the melter to continually produce the liquid hot melt adhesive used by the dispensing device. For example, it is known for a person to employ a scoop or bucket to retrieve hot melt adhesive solids from a bulk supply, and to deliver those adhesive solids directly to the melter. This manual process may be undesirable because hot melt adhesive dust may be stirred up during handling and because transferring hot melt adhesive solids in this manner is prone to waste caused by spillage. In addition, manual filling of the melter substantially increases the amount of operator time that must be spent attending to the supply of adhesive solids to the melter.

To address these concerns with manual filling, the adhesive material may be provided on demand by automated filling, depending on the specific design of the melter. In some of these systems, the adhesive solids are designed to be transferred by pressurized air from a pneumatic pump of a fill system into the melter, whenever the melter requires additional adhesive material to heat and dispense. In this regard, the fill system ensures that the amount of adhesive material within the melter remains at sufficient levels during operation of the dispensing system. The fill system must be supplied reliably with additional adhesive solids in order to meet the demands of the melter and its associated dispensing device(s) during operation.

One particular type of known fill system is defined by a tote-based pneumatic fill system. The tote-based pneumatic fill system includes a storage container or "tote" with an interior space having a size sufficient to hold enough adhesive solids for multiple hours of operation of the melter(s) connected to the fill system. A transfer pump, such as a pneumatic pump, connects to the tote for moving the adhesive solids via a hose from a lower portion of the tote to the melter. Traditionally, the adhesive solids will gravity feed into the lower portion of the tote toward an inlet of the transfer pump, and this gravity feed leads to a submerging of the pump inlet with adhesive solids.

Pneumatic pumps generally rely on the suction of gas, such as air entrained within gaps between individual pieces of adhesive solids, for moving the adhesive solids at the pump inlet. When the pneumatic pump generates a vacuum at the inlet to draw some of the adhesive solids out of the tote, make-up or replacement gas is typically drawn through the entire height of adhesive solids stacked within the tote, and this can be difficult. As a result, the transfer pump in conventional tote-based fill systems may become starved for air, which hampers the ability to produce the vacuum required in order to continue moving adhesive solids from the tote.

The adhesive solids may also have a tendency to stick together and form large clumps of adhesive in some environments, further exacerbating the problems with reliably removing the adhesive solids from the tote with the transfer pump. To this end, the clumps of adhesive can become lodged in and block the pump inlet, and the clumps of adhesive also adversely affect the drawing of make-up or replacement gas though the stacked adhesive solids to the pump inlet. This problem with clumping or sticking together is particularly problematic when the adhesive material defines softer formulations, such as rubber-based formulations that tend to be more malleable and sticky under pressure, and also when the tote is used in a relatively warm operating environment. As many of the conventional totes are configured to hold over 150 pounds of adhesive solids for enabling multiple hours of operation, the pump inlets tend to become clogged or starved for air more readily when the tote is completely filled with adhesive (as the weight of adhesive applying pressure to adhesive solids near the pump inlet is greater when the tote is completely filled). However, it is not desirable to only partially fill the tote during each refill cycle because that causes the amount of operator time needed to replenish the supply of adhesive solids in the tote to increase to an undesirable level, perhaps even comparable to operator time for manual filling processes.

Current methods for avoiding clumping or sticking together of adhesive are limited. For example, it is known to apply a mesh or grating to the top opening of the tote in tote-based pneumatic fill systems to prevent clumps of adhesive from being poured into the tote during an operator refill. But such a mesh or grating only removes clumps that occur in bulk supply before the temporary storage within the tote. The clumping or sticking together of adhesive continues over time even after the adhesive solids are placed in the tote, as described above. The mesh or grate provides no solution for this ongoing problem. Therefore, the total storage capacity of totes in these fill systems has been limited or reduced in an attempt to avoid the clumping problem. Moreover, certain types of adhesive formulations (e.g., rubber-based) and adhesive solids defining less free-flowing particulate shapes have been considered unusable with tote-based pneumatic fill systems as a result of these deficiencies. Thus, the conventional tote-based fill systems cannot be used in many applications and continue to struggle with problems caused by clumping of adhesive solids and lack of air flow to the pump inlets.

There is a need, therefore, for improvements in hot melt adhesive systems, and specifically, a need for a fill system and method for use with a transfer pump that addresses present challenges and characteristics such as those discussed above.

### Summary

According to one embodiment, a fill system is configured to retain and transfer adhesive solids to an adhesive melter. The fill system includes a storage container for containing a bulk supply of adhesive solids, a separating element, and a drive. The separating element is positioned proximate to the storage container and configured to engage at least one surface of the bulk supply. To this end, the separating element moves relative to the at least one surface to cause separation of adhesive solids from the bulk supply and thereby produce a flow of fluidized adhesive solids from the storage container. The drive is coupled to at least one of the storage container or the separating element. The drive creates the relative motion between the separating element and the at least one surface of the bulk supply, such that the flow of fluidized adhesive solids stops exiting the storage container when the drive stops creating the relative motion between the separating element and the at least one surface of the bulk supply. Consequently, adhesive solids are separated from a bulk supply on demand and stopped when delivery to the melter is no longer necessary.

To enhance movement of the adhesive solids through the storage container, the storage container includes at least one sidewall coated with or formed from a friction reducing material facing towards the bulk supply of adhesive solids. Moreover, the sidewall may be angled slightly outwardly from a top opening of the storage container to a bottom end of the storage container. These measures limit the likelihood that gravitational forces on the bulk supply will cause blockages or sticking of the adhesive solids to the sidewall of the storage container.

In another aspect, the fill system includes a pump inlet chamber communicating with the storage container. The flow of fluidized adhesive solids exiting the storage container enters the pump inlet chamber, where at least one pump communicating with the pump inlet chamber operates to remove the flow of fluidized adhesive solids. This flow of fluidized adhesive solids is then delivered to the adhesive melter(s). Additionally, the pump inlet chamber may further include a lower chamber portion adjacent to the pump and an upper chamber portion extending between the lower chamber portion and the storage container. In such embodiments, the fill system also includes a pump inlet clearing device that keeps the lower chamber portion clear of solidified masses formed by the flow of fluidized adhesive solids between operational cycles of the pump.

For example, the pump inlet clearing device includes a cooling device that provides cooling energy to prevent adhesive solids in the lower chamber portion from coalescing into solidified masses, in some embodiments. In another example, an agitation device is associated with the pump inlet chamber and is configured to remove the adhesive solids from the lower chamber portion between operational cycles of the pump.

The selective separation of adhesive solids from the bulk supply in the storage container and delivery of those adhesive solids into the pump chamber portion enables pumps and melters to be adhesive fed on demand without air starvation or blockage occurring at the pump inlets. Accordingly, the fill system enhances the ability of pneumatic-based fill systems to reliably distribute and handle many distinct types of adhesive solids compositions in a plurality of operating conditions.

It will be understood that the fill system may include many different types of separating elements and drives, depending on the preferences of the end user. For example, the separating element may be configured to sift across a surface of the bulk supply of adhesive solids, and this sifting may occur from the top opening of the storage container downwardly or from the bottom end upwardly. Moreover, the sifting may be caused by different types of movement of the separating element such as rotation, translation, and/or vibration. Alternatively, the drive may rotate the bulk supply of adhesive solids to force the bulk supply into contact with the separating element, which may or may not be stationary depending on the specific embodiment chosen. In this regard, the drive being coupled to at least one of the separating element or the storage container means that the drive can move either or both of these elements. Regardless of the particular devices and methods used, the fill system continues to deliver adhesive solids only on demand from the pumps and melters, which addresses many of the problems encountered when using conventional fill systems or manual filling processes.

In one particular embodiment of the invention, a fill system for retaining and transferring adhesive solids to an adhesive melter includes a storage container having at least one stationary sidewall and a bottom end for containing a bulk supply of adhesive solids. The fill system also includes a sifter plate positioned proximate to the bottom end of the storage container and having at least one aperture. A drive is coupled to the sifter plate and selectively rotates the sifter plate to produce a relative motion against a bottom surface of the bulk supply of adhesive solids facing towards the sifter plate. The relative motion causes adhesive solids to separate from the bulk supply and form a flow of fluidized adhesive solids, at least a portion of which moves out of the storage container through the at least one aperture. The sifter plate stops the flow of fluidized adhesive solids out of the storage container when the drive stops rotating the sifter plate. It will be understood that a residual amount of the flow of fluidized adhesive solids may continue for a brief period of time following the stopped movement of the sifter plate to allow for the adhesive solids to settle within the storage container to a static position, but the flow does stop quickly after stopping the rotary movement of the sifter plate. Consequently, adhesive solids are separated and delivered out of the storage container only on demand by pumps and melters downstream from the storage container.

In one aspect, the sifter plate is a circular sifter disc. This sifter disc includes an outer peripheral edge portion that is larger in size than the bottom end of the storage container. In such embodiments, the fill system includes a sidewall extension projecting outwardly and downwardly from the at least one sidewall at the bottom end. Thus, a gap is provided between the outer peripheral edge portion of the sifter disc and the sidewall extension, the gap being sized to receive at least a portion of the flow of fluidized adhesive solids moving out of the storage container. The gap and the outer peripheral edge portion collectively define a gap angle through which the flow of fluidized adhesive solids must move to exit the storage container. This gap angle is less than an angle of repose defined by the adhesive solids, thereby automatically stopping the flow of fluidized adhesive solids from exiting the storage container when the sifter disc stops rotating. Alternatively, a blocking member, such as a felt disc, may be inserted into the gap to prevent flow of fluidized adhesive solids from exiting the storage container through the gap, thereby forcing all flow exiting the storage container to move through the at least one aperture in the sifter disc.

The aperture(s) on the sifter plate are positioned to sift generally evenly across the surface of the bulk supply of adhesive solids facing towards the sifter plate. In one aspect, the sifter plate includes a plurality of elongate slots extending through the sifter plate. For each of the elongate slots, a scoop-shaped block is positioned over the elongate slot. The scoop-shaped block includes a top plate spaced above the elongate slot such that flow of fluidized adhesive solids is forced to move horizontally through the scoop-shaped block to access the respective elongate slot. To this end, the scoop-shaped block operates similarly as the gap formed along the outer peripheral edge of the sifter plate described above. The top plate may be sharpened at an opening defined by the scoop-shaped block in order to cut through the bulk supply of adhesive solids as the sifter plate rotates against the surface of the bulk supply.

In another aspect, the sifter plate is at least partially perforated to define a plurality of apertures. In one example, the sifter plate includes a number of perforated inserts coupled to a remainder of the sifter plate. These perforated inserts provide a generally planar sifting surface facing the bulk supply of adhesive solids in the storage container. The perforated inserts may define any shape and size, for example, pie-piece shaped in some embodiments. In another example, the entirety of the sifter plate is perforated. Regardless of how the sifter plate is perforated, the apertures are sized so as to be larger than an average diameter of the adhesive solids but smaller than twice this average diameter of the adhesive solids. As a result, the apertures enable flow of fluidized adhesive solids during movement of the sifter plate, but eventually stop the flow when adhesive solids bridge over the apertures when the sifter plate stops moving.

The drive includes one or more elements that rotate the sifter plate when downstream pumps and melters demand adhesive solids from the storage container. In one embodiment, the drive includes a ring gear coupled to the sifter plate and a ratcheting arm engaged with the ring gear for driving the ring gear through a partial rotation, thereby also rotating the sifter plate. An air cylinder may be coupled to the ratcheting arm for pushing the ratcheting arm through the partial rotation of the ring gear and sifter plate. For example, the ratcheting arm includes an engagement block with teeth that are spring-biased into engagement with the ring gear. The spring bias keeps the ring gear and ratcheting arm engaged during driving movement of the air cylinder, but then allows the ratcheting arm to ride over the teeth on the ring gear to move back to an initial position (e.g., the ratcheting action of the drive). Alternative types of drives may also be used, including but not limited to electric motors and similar devices.

As alluded to above, the fill system also includes a pump inlet chamber communicating with the storage container and at least one pump communicating with the pump inlet chamber. The pump inlet chamber includes a lower chamber portion at the pump(s) and an upper chamber portion extending between the storage container and the lower chamber portion. In one particular embodiment, the lower chamber portion is a cylindrical tube defining a diameter about equal in size to an inlet diameter for each of the pump(s). This sizing of the lower chamber portion maximizes the efficient performance of each of the at least one pump when removing adhesive solids from the pump inlet chamber. The fill system also includes a pump inlet clearing device, in the form of a vacuum generator associated with the pump(s) or an eductor positioned adjacent to the pump(s), for keeping the lower chamber portion clear of solidified masses of adhesive between operational cycles of the at least one pump.

Also as mentioned above, the storage container is configured to encourage proper sifting operation of the fill system. To this end, the at least one stationary sidewall of the storage container may be coated with or formed from a friction reducing material, and the stationary sidewall may be angled outwardly from a top opening to the bottom end as well. In another aspect, the at least one stationary sidewall defines a non-circular cross section to discourage the bulk supply of adhesive solids from exhibiting unified bulk rotation with the sifter plate. In this regard, the sifter plate and the storage container are configured to ensure the relative motion and sifting action when a flow of fluidized adhesive solids is demanded by pumps and melters.

According to another embodiment of the invention, a method of transferring adhesive solids to an adhesive melter with a fill system is provided. The method includes storing a bulk supply of adhesive solids within a storage container including a bottom end. A sifter plate located adjacent to the bottom end is rotated to produce relative motion against at least one surface of the bulk supply of adhesive solids. This relative motion separates adhesive solids from the bulk supply, thereby generating a flow of fluidized adhesive solids, at least a portion of which moves out of the storage container through at least one aperture in the sifter plate. The method also includes stopping the flow of fluidized adhesive solids from exiting the storage container when the sifter plate stops rotating. Therefore, the adhesive solids may be supplied on demand to pumps and melters by the fill system.

In one aspect, the method also includes supplying the flow of fluidized adhesive solids moving out of the storage container into a pump inlet chamber. At least one pump communicating with the pump inlet chamber is then used to remove the flow of fluidized adhesive solids from the pump inlet chamber. The method further includes clearing the pump inlet chamber from the adhesive solids between operating cycles of the at least one pump. Consequently, the adhesive solids do not coalesce into solidified masses that adversely affect the operation of the pumps between operating cycles.

In another aspect, the method includes forcing the flow of fluidized adhesive solids to move horizontally along the sifter plate before the flow of fluidized adhesive solids is able to access the at least one aperture or an outer peripheral edge of the sifter plate. For example, the sifter plate may include elongate slots which define the at least one aperture, and these elongate slots are covered by scoop-shaped blocks that block the flow of fluidized adhesive solids from entering the elongate slots until the sifter plate rotates and forces the flow of fluidized adhesive solids to move horizontally into the scoop-shaped blocks. In another example, a sidewall extension adjacent to the bottom end of the storage container defines a gap with an outer peripheral edge portion of the sifter plate. The gap is sized to block adhesive solids flowing at an angle of repose from exiting the storage container until the sifter plate rotates and generates horizontal movement of the flow of fluidized adhesive solids through the gap.

These and other objects and advantages of the invention will become more readily apparent during the following detailed description taken in conjunction with the drawings herein.

### Brief Description of the Drawings

FIG. 1 is a perspective view of a fill system for retaining and transferring adhesive solids to one or more melters, in accordance with a first embodiment of the invention.
FIG. 2 is a top view of the fill system of FIG. 1, showing specific features of a storage container and sifter disc used with the fill system.
FIG. 3 is a schematic side cross sectional view of a lower portion of the fill system of FIG. 1, taken along line 3-3 in FIG. 1.
FIG. 4 is a perspective view of the sifter disc of FIG. 2 used with the fill system of FIG. 1, illustrating two scoop-shaped blocks covering elongate slots in the sifter disc.
FIG. 5 is a detailed perspective view of one of the scoop-shaped blocks of FIG. 4.
FIG. 6 is a partially exploded perspective view of the sifter disc of FIG. 2 and a drive associated with the fill system and sifter disc.
FIG. 7 is a top cross-sectional view of the fill system of FIG. 1, taken along line 7-7 in FIG. 3, and illustrating a first operating state of the drive in which an air cylinder moves a ratcheting arm from an initial position in a first direction to rotate a ring gear coupled with the sifter disc.
FIG. 8 is a detailed top view of the engagement between the ratcheting arm and the ring gear in the first operating state of FIG. 7.
FIG. 9 is a top cross-sectional view of the fill system of FIG. 7, taken along line 7-7 in FIG. 3, and illustrating a second operating state of the drive in which the air cylinder returns the ratcheting arm back to an initial position relative to the ring gear.
FIG. 10 is a detailed top view of the engagement between the ratcheting arm and the ring gear in the second operating state of FIG. 9.
FIG. 11 is a detailed top view of the engagement between the ratcheting arm and the ring gear just after the second operating state shown in FIGS. 9 and 10.
FIG. 12 is a side cross sectional view of the fill system of FIG. 1 showing a flow of fluidized adhesive solids generated through a gap between a sidewall extension of the fill system and an outer peripheral edge portion of the sifter disc enabled by movement of the sifter disc.
FIG. 13 is a side cross sectional view of the fill system of FIG. 12 showing that the flow of fluidized adhesive solids stops exiting the storage container when the sifter disc stops moving.
FIG. 14 is a side cross sectional view of a fill system according to another embodiment of the invention, this embodiment including a blocking member inserted into the gap between the sidewall extension and the outer peripheral edge portion of the sifter disc.
FIG. 15 is a perspective view of an alternative embodiment of a sifter disc that may be used with the fill system of FIG. 1, the sifter disc of this embodiment including multiple perforated inserts.
FIG. 16 is a perspective view of another alternative embodiment of a sifter disc that may be used with the fill system of FIG. 1, the sifter disc of this embodiment being perforated along an entirety of the sifter disc.
FIG. 17 is a side cross sectional view of the fill system of FIG. 1 including one of the alternative perforated sifter discs of FIGS. 15 and 16, showing the flow of fluidized adhesive solids through and around the sifter disc during movement of the sifter disc.
FIG. 18 is a side cross sectional view of the fill system of FIG. 17 showing that the flow of fluidized adhesive solids stops exiting the storage container when the sifter disc stops moving.
FIG. 19 is a side cross sectional view of the fill system of FIG. 1, taken along line 3-3, and including a number of alternative structures and pump inlet clearing devices used in alternative embodiments of the fill system.

### Detailed Description

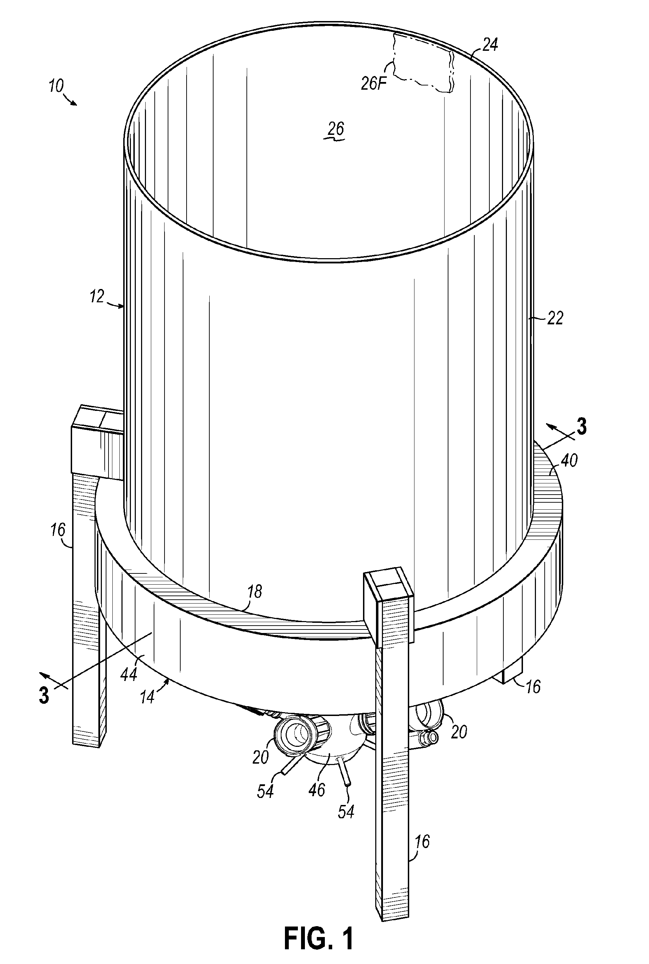

With reference to FIGS. 1 through 13, an exemplary embodiment of a fill system in accordance with the invention is shown in detail. To this end, the fill system includes a storage container that receives a bulk supply of adhesive solids, a separating element that is configured to move relative to a surface of the bulk supply to separate adhesive solids from the bulk supply, and a drive that creates the relative motion between the separating element and the bulk supply. For example, the separating element is configured to sift or grate along a bottom surface of the bulk supply of adhesive solids as that bulk supply is fed by gravity through the storage container. Consequently, most solidified masses of adhesive are broken up or blocked from flowing out of the storage container and then into inlets of pumps that may be used to pneumatically deliver the adhesive solids to one or more melters on demand. Accordingly, the fill system improves the reliability and operational performance of adhesive fill systems by reducing the likelihood of problems such as pump inlet flooding, air starvation at the pump, and blockages caused by deformation and coalescing of adhesive solids.

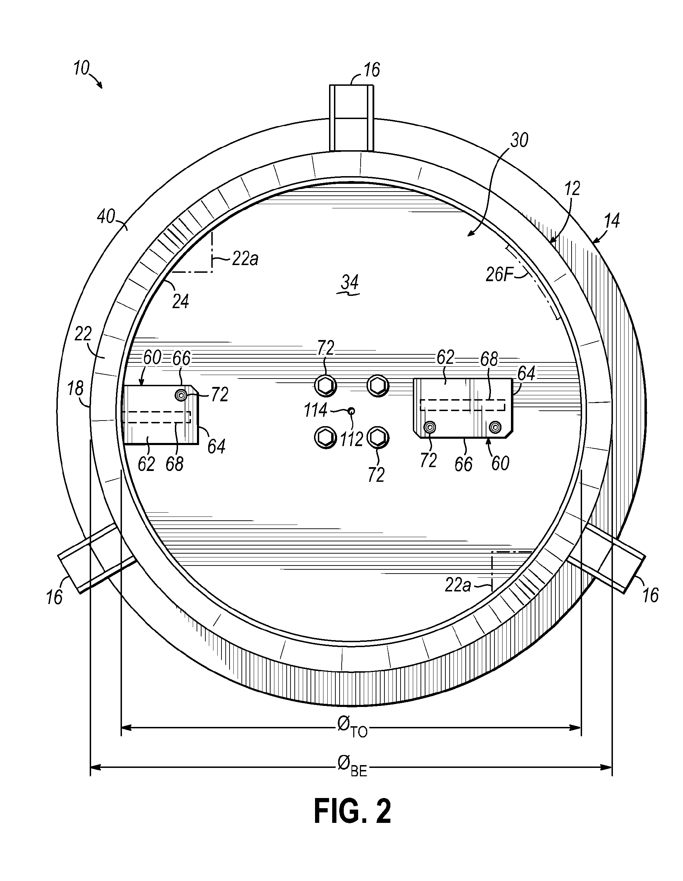

With particular reference to FIGS. 1 and 2, the exemplary embodiment of the fill system 10 includes a storage container 12 positioned directly above a pump inlet chamber 14. The storage container 12 and the pump inlet chamber 14 are each supported by a plurality of support legs 16 coupled to and extending downwardly from a bottom end 18 of the storage container 12. It will be understood that the specific number of support legs 16 and the method of coupling to the bottom end 18 of the storage container 12 may be modified from what is shown in these figures without departing from the scope of the invention.

The storage container 12 receives a bulk supply of adhesive solids (such as solid adhesive particulate) which may be selectively transferred into the pump inlet chamber 14 for delivery to a plurality of pumps 20 communicating with the pump inlet chamber 14. Each of the pumps 20 is configured to supply adhesive solids to one or more melters (not shown) associated with adhesive dispensing units. Consequently, the storage container 12 is sized to receive a sufficient supply of adhesive to feed the plurality of pumps 20 for a number of hours during normal operation without requiring manual intervention or refill. For example, the storage container 12 in the exemplary embodiment contains up to 150 pounds of adhesive solids when the melters and pumps 20 are configured to receive, on average, up to 5 pounds of adhesive per hour in normal operation (and on average, collectively up to 20 pounds per hour, or 7-8 hours of operation without intervention). Of course, if demands from the pumps 20 are increased or decreased, the frequency at which the fill system 10 will require refilling will vary accordingly.

The storage container 12 includes a stationary sidewall 22 defining a generally circular cross section from a top opening 24 to the bottom end 18. The stationary sidewall 22 defines an interior surface 26 that faces towards the bulk supply of adhesive solids received within the storage container 12. This interior surface 26 is advantageously formed from or coated with a friction reducing material such as polytetrafluoroethylene or polyethylene. Alternatively, a fabric liner (a portion of which is shown in phantom at reference 26F in FIG. 2) formed from a heavy canvas or tarp-like material, such as nylon-based fabrics commercially available under the brand Cordura® in one example, may be loosely fitted to the interior surface 26 and therefore configured to flex to release adhesive solids moving downwardly through the storage container 12. In addition, or alternatively in some embodiments, the stationary sidewall 22 is angled slightly outwardly from the top opening 24 to the bottom end 18 such that the top opening 24 is smaller in cross-sectional size than the bottom end 18. This tapering of the storage container 12 towards the top opening 24 is shown most clearly in the top-down view FIG. 2, more specifically by the smaller diameter Ø_{TO} defined at the top opening 24 as compared to the larger diameter Ø_{BE} defined at the bottom end 18. Consequently, gravitational forces acting on the bulk supply of adhesive solids do not tend to push those adhesive solids into contact with the sidewall 22 of the storage container 12. The friction reducing material and the angling of the sidewall 22, either alone or in combination, serve to promote downward flow of fluidized adhesive solids towards the bottom end 18. In this regard, the risk of adhesive solids wedging within the storage container 12 or solidifying along the stationary sidewall 22 is reduced compared to conventional fill system designs.

The top opening 24 is shown to be open in FIG. 1. However, it will be appreciated that the top opening 24 could include a lid or a mesh covering in other embodiments of the invention. Such a mesh covering would prevent coalesced clumps of solidified adhesive from being delivered into the storage container 12 when the storage container 12 is refilled at the top opening 24. The bottom end 18 of the storage container 12 is also designed to be open for the reasons set forth in detail below.

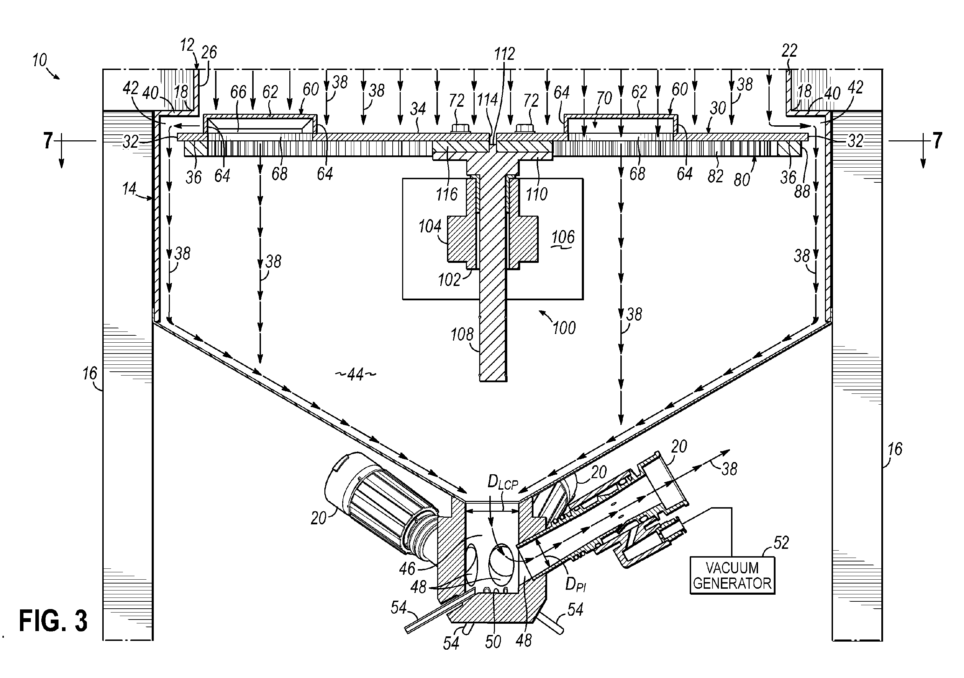

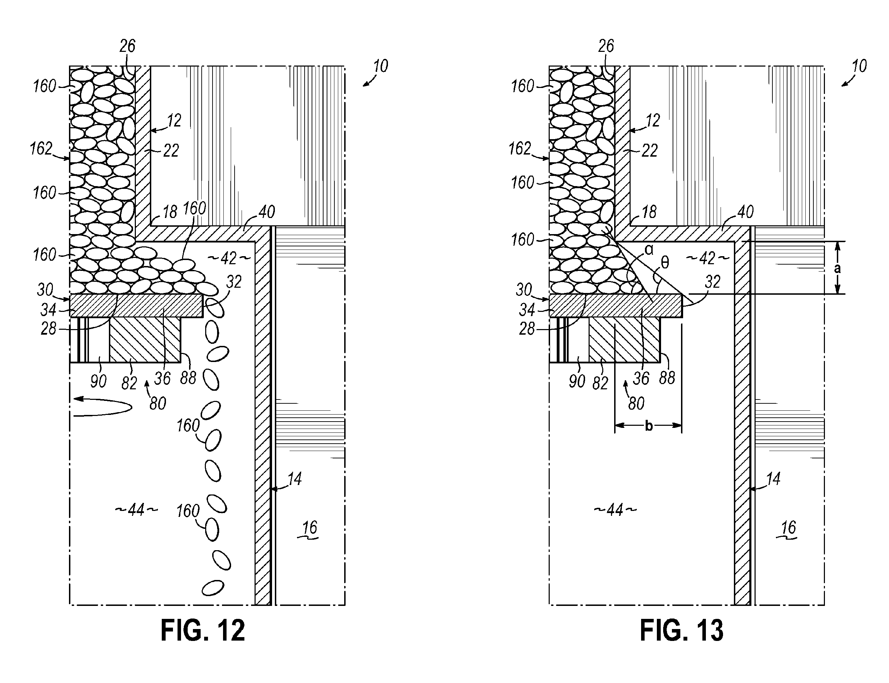

As shown in FIGS. 2 and 3, the fill system 10 also includes a sifter plate 30 located proximate to the bottom end 18 of the storage container 12. The sifter plate 30 is mounted as a type of floating plate, which means the sifter plate 30 is supported so as to enable movement relative to the bottom end 18 of the storage container 12, and the sifter plate 30 may also be referred to as an agitator plate in some embodiments. To this end, the sifter plate 30 effectively closes off or blocks the bottom end 18 of the storage container 12 so that the bulk supply of adhesive solids does not uncontrollably feed into the pump inlet chamber 14. The sifter plate 30 functions to control the flow of fluidized adhesive solids between the storage container 12 and the pump inlet chamber 14. More specifically, the sifter plate 30 rotates to control the flow of fluidized adhesive solids, and in order to assure that the sifter plate 30 is sifting across a generally stationary bottom surface 28 of the bulk supply (shown only in FIGS. 12 through 14), the sidewall 22 of the storage container 12 may be made non-circular to discourage bulk rotation of the bulk supply along with the rotation of the sifter plate 30. This optional non-circular shape may be provided by one or more polygonal projections 22a extending into the bulk supply as shown in phantom in FIG. 2. It will be appreciated that other types of structures or modified (non-circular) shapes of the stationary sidewall 22 may be used in other embodiments to achieve the same purpose.

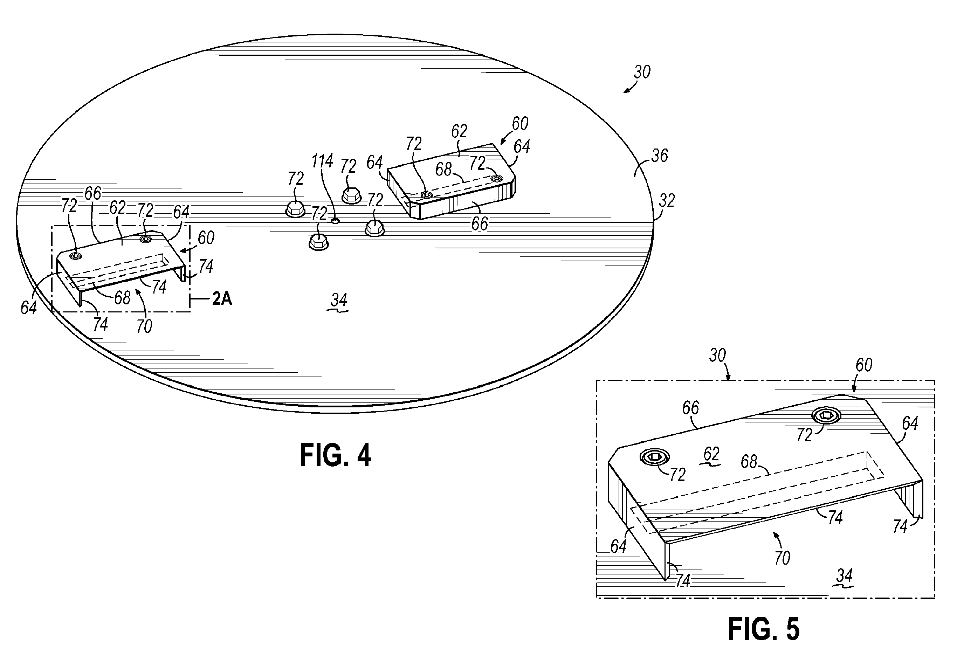

The sifter plate 30 is larger in size than the bottom end 18 of the storage container 12, which prevents the adhesive solids from continuously flowing around or applying pressure to an outermost peripheral edge 32 defined by the sifter plate 30. In this regard, the sifter plate 30 effectively defines a central plate portion 34 covering the bottom end 18 and an outer peripheral edge portion 36 extending radially beyond the central plate portion 34 and beyond the bottom end 18 of the storage container 12. The sifter plate 30 of this embodiment is configured to rotate to sift or grate the bottom surface 28 of the bulk supply of adhesive solids which faces toward the sifter plate 30, and also to enable flow of fluidized adhesive solids separated from the bulk supply through apertures in the sifter plate 30 and around the outermost peripheral edge 32 (shown by arrows 38 in FIG. 3). As a result, the sifter plate 30 of this embodiment is a circular sifter disc 30, although it will be understood that other shapes and cross-sectional configurations of the sifter plate 30 are possible in other embodiments consistent with the scope of the invention. The specific sifting operation of the sifter plate 30 is described with reference to FIGS. 4 and 5 and FIGS. 12 and 13 below.

With continued reference to FIG. 3, the fill system 10 also includes a sidewall extension 40 that projects radially outwardly and then downwardly from the bottom end 18 of the storage container 12. The sidewall extension 40 is larger than the storage container 12 so as to surround and accommodate the outer peripheral edge portion 36 of the sifter plate 30. The sidewall extension 40 also defines a part of the pump inlet chamber 14 shown in detail in FIG. 3. The sidewall extension 40 is positioned so as to form a gap 42 between the sidewall extension 40 and the outer peripheral edge portion 36 of the sifter plate 30. This gap 42 enables selective flow of the adhesive solids out of the storage container 12 and into the pump inlet chamber 14 whenever the sifter plate 30 is rotated. However, as described in further detail below, the gap 42 is also sized to restrict flow of fluidized adhesive solids out of the storage container 12 when the sifter plate 30 stops moving. Just like the sidewall 22 of the storage container 12, the sidewall extension 40 may extend along the support legs 16 and may be connected to the support legs 16 for supporting the pump inlet chamber 14.

As described above, the sidewall extension 40 defines a portion of the pump inlet chamber 14, which is shown in cross section in FIG. 3. The pump inlet chamber 14 includes an upper chamber portion 44 extending downwardly from the sidewall extension 40 and a lower chamber portion 46 located beneath the upper chamber portion 44. The lower chamber portion 46 communicates with the plurality of pumps 20, which are shown as five pumps 20 in the illustrated embodiment (not all five pumps 20 can be viewed in any one perspective). However, it will be understood that one or more of these pumps 20 could be removed and the corresponding inlets 48 plugged when fewer than five pumps 20 are to be used with the pump inlet chamber 14. The upper chamber portion 44 is generally cylindrical along the sidewall extension 40 and then becomes funnel-shaped adjacent to the lower chamber portion 46. The sidewall extension 40 and the funnel-shaped upper chamber portion 44 may include walls that are formed from or coated with friction reducing materials, similar to the stationary sidewall 22 described above. Thus, the flow of fluidized adhesive solids exiting the storage container 12 are funneled by the upper chamber portion 44 into the lower chamber portion 46 for access by the pumps 20 without significant risk of adhesive build-up or solidification along the walls of the pump inlet chamber 14.

The lower chamber portion 46 of the pump inlet chamber 14 in the exemplary embodiment is sized as a cylindrical space having a diameter D_{LCP} approximately equal in size to the diameter D_{PI} of inlets 48 to the pumps 20 coupled to the lower chamber portion 46. This approximate equivalence in diameters improves the operational efficiency or performance of drawing adhesive solids into and through the inlets 48 when required for delivery to the associated melters and dispensing units. Each of the pumps 20 is mounted to the lower chamber portion 46 so that the pumps 20 and the inlets 48 angle upwardly from a bottom end 50 of the lower chamber portion 46. The adhesive solids flowing into the lower chamber portion 46 are deposited onto the bottom end 50, which is adjacent to the inlets 48 of the pumps 20. The upward angling of the pumps 20 ensures that adhesive solids do not flow or migrate in large quantities into the inlets 48 of pumps 20 that are currently not operating. As a result, blockages caused by adhesive solids coalescing into solidified masses within the inlets 48 are minimized during operation.

The pumps 20 used with this embodiment of the fill system 10 are pneumatic pumps that generate a vacuum (e.g., by vacuum generator 52 described below) or moving air force (e.g., by eductor 54 described below) at the inlets 48 in order to draw and push adhesive solids through the pumps 20 and to melters or other structures connected downstream of the pumps 20. These pneumatic pumps 20 are largely known in the art and are not described in detail below. In addition, the fill system 10 may include a mechanism for clearing out the adhesive solids in the lower chamber portion 46 between operational cycles of the pumps 20. In one simplified example used with the exemplary embodiment, the pump inlet clearing device includes a "vacuum generator" 52 (schematically shown in FIG. 3, but it will be understood that the vacuum is generated by air flowing into the pumps 20 as is usual in the pneumatic pump field) associated with the pumps 20 and/or a compressed air nozzle in the form of an eductor 54 pointed towards the associated inlet 48 of the pumps 20. To this end, each of the pumps 20 is associated with a separate eductor 54.

The vacuum generators 52 defined by the pumps 20 produce a suction force that draws adhesive solids out of the lower chamber portion 46 and through the pump 20. Similarly, the eductors 54 produce a blast of air or a compressed air jet across the lower chamber portion 46 that pushes on adhesive solids to move those adhesive solids into and through the inlets 48 and the pumps 20. When the vacuum generators 52 and the eductors 54 are used in combination, the operation of the pumps 20 more quickly empties the lower chamber portion 46, but it will be understood that one of these elements may be omitted in other embodiments of the fill system 10. Consequently, the lower chamber portion 46 can be positively cleared from adhesive solids during periods of inactivity of the pumps 20 and of the sifter plate 30, thereby avoiding solidification of adhesive within the lower chamber portion 46 that can lead to blockages of the inlets 48. To this end, the eductors 54 (in one example) act as agitation devices that can remove adhesive solids from the lower chamber portion 46 between dispensing cycles as set forth in further detail below.

In operation, the sifter plate 30 rotates to separate some adhesive solids from the bulk supply within the storage container 12, and these adhesive solids flow into the pump inlet chamber 14 for removal by the pumps 20. The sifter plate 30 stops the flow of fluidized adhesive solids out of the storage container 12 when the sifter plate 30 is not rotating, so the flow of fluidized adhesive solids is delivered only on demand when needed by the pumps 20. As such, the pump inlet chamber 14 is maintained in an empty state between operating cycles of the pumps 20, and stagnation and coalescing of adhesive solids within the pump inlet chamber 14 are avoided. The specific operation and functionality of the sifter plate 30 and the associated drive are now described in detail below.

With reference to FIGS. 3 through 5, further features of the sifter plate 30 are illustrated in detail. As described above, the sifter plate 30 of this embodiment is designed to separate adhesive solids from the bulk supply of adhesive solids sitting on top of the sifter plate 30 within the storage container 12. The sifter plate 30 accomplishes this in two steps. First, the sifter plate 30 produces a relative motion against the generally stationary bulk supply of adhesive solids, which causes a sifting or grating of adhesive solids to separate or break off those adhesive solids from the remainder of the bulk supply. Second, the sifter plate 30 encourages or forces the separated flow of fluidized adhesive solids to move through a horizontal distance before accessing the pump inlet chamber 14 via apertures through the sifter plate 30 or around the outermost peripheral edge 32.

The sifting or grating is at least partially accomplished by a plurality of scoop-shaped blocks 60 provided along the central plate portion 34 of the sifter plate 30. The scoop-shaped blocks 60 project upwardly from the sifter plate 30 and therefore cut into or through the bulk supply of adhesive solids at the surface facing towards the sifter plate 30. As shown by the example of having two scoop-shaped blocks 60 in this embodiment, the scoop-shaped blocks 60 are arranged generally evenly in a radial direction across the central plate portion 34 so that the sifting action occurs roughly evenly across the bottom surface 28 of the bulk supply facing the sifter plate 30. Accordingly, adhesive solids across the entire bottom surface 28 of the bulk supply are sifted and separated for flow out of the storage container 12.

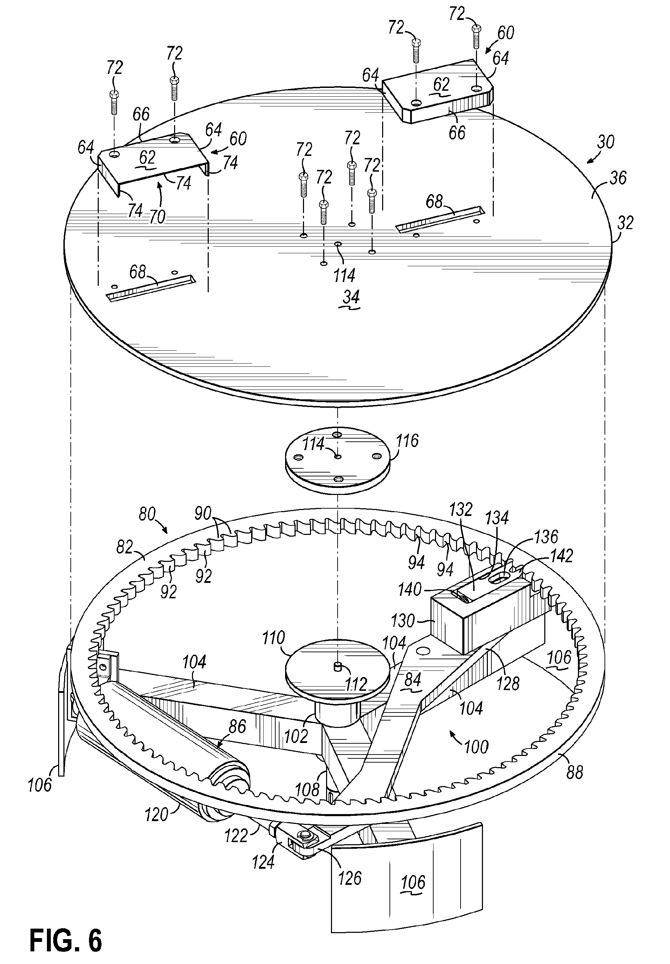

The scoop-shaped blocks 60 are shown in more detail in FIGS. 4 and 5 (and are also exploded away from the sifter plate 30 in FIG. 6). Each of the scoop-shaped blocks 60 includes a top plate 62 oriented generally parallel to the sifter plate 30 and spaced above the sifter plate 30 by a pair of opposing sidewalls 64, as well as an optional rear wall 66. Each of the scoop-shaped blocks 60 and top plates 62 covers an associated elongate slot 68 through the sifter plate 30, which is shown in phantom in FIGS. 4 and 5. The elongate slots 68 serve as the apertures through the sifter plate 30 that enable flow of fluidized adhesive solids out of the storage container 12 at the central plate portion 34. As alluded to above, additional adhesive solids may exit the storage container 12 at the outer peripheral edge portion 36 by flowing around the peripheral edge 32 of the sifter plate 30.

Covering the elongate slots 68 in the sifter plate 30 with the scoop-shaped blocks 60 serves at least two purposes in this embodiment of the fill system 10. First, the bulk supply of adhesive solids is not pressing immediately downward with significant weight onto the elongate slots 68. As a result, the elongate slots 68 tend to avoid clogging caused by high compressive forces that may otherwise be applied to adhesive solids at the elongate slots 68. Second, the scoop-shaped blocks 60 force the flow of fluidized adhesive solids to move horizontally some distance before accessing the elongate slots 68. This horizontal distance between an opening 70 defined in each scoop-shaped blocks 60 and the elongate slot 68 is sized to prevent adhesive solids flowing with gravity from continuing to flow through the elongate slot 68 when the sifter plate 30 stops moving (the flow may continue for a short period of time after stopping the sifter plate 30, while the adhesive solids settle back to a static condition within the storage container 12). To this end, the horizontal distance provided by the scoop-shaped blocks 60 serves a similar function as the sizing of the gap 42 provided at the outer peripheral edge portion 36 of the sifter plate 30. Therefore, the flow of fluidized adhesive solids into the pump inlet chamber 14 may be stopped when rotary movement of the sifter plate 30 is terminated.

In view of this, the elongate slots 68 are typically located closer to the rear wall 66 than the opening 70. In embodiments where the scoop-shaped blocks 60 include the rear walls 66, this positioning of the elongate slots 68 avoids producing a build-up of adhesive solids within the scoop-shaped block 60 and behind the elongate slots 68, as such a build-up may coalesce into a solidified mass over time that could potentially block the flow of fluidized adhesive solids from the storage container 12. Of course, it will be understood that such a build-up is not an issue in alternative embodiments where the rear wall 66 is omitted. The scoop-shaped blocks 60 are fastened to the sifter plate 30 using threaded fasteners 72 as shown, although it will be understood that other methods of coupling these elements together may also be used without departing from the scope of the invention.

As shown most clearly in the detailed view of FIG. 5, the top plate 62 and each of the opposing sidewalls 64 is sharpened to a narrow leading edge 74 at the opening 70. This sharpening of the top plate 62 and the sidewalls 64 reduces the effective cross-sectional area of the leading portion of the scoop-shaped blocks 60 as the scoop-shaped blocks 60 rotate and cut through the bulk supply of adhesive solids. To this end, leaving these elements thickened or flat at the leading edge 74 would generate a plowing effect that would increase resistance to movement of the scoop-shaped blocks 60 through the bulk supply of adhesive solids. In this regard, the sharpened leading edge 74 more readily cuts through the adhesive solids to separate those adhesive solids from the bulk supply, thereby increasing the amount of sifting along the bottom surface 28 of the bulk supply and minimizing the torque or force required to rotate the sifter plate 30 against this surface. The tapering of the top plate 62 and the sidewalls 64 also tends to guide adhesive solids located at the opening 70 to flow horizontally through the scoop-shaped block 60 and towards the associated elongate slot 68. Consequently, the scoop-shaped blocks 60 are configured to sift and generate a flow of fluidized adhesive solids through the elongate slots 68 during rotation of the sifter plate 30. It will be understood that the shape and size of the elongate slots 68 and the scoop-shaped blocks 60 may be modified in other embodiments consistent with the type of adhesive solids being delivered and the preferences of the end user of the fill system 10.

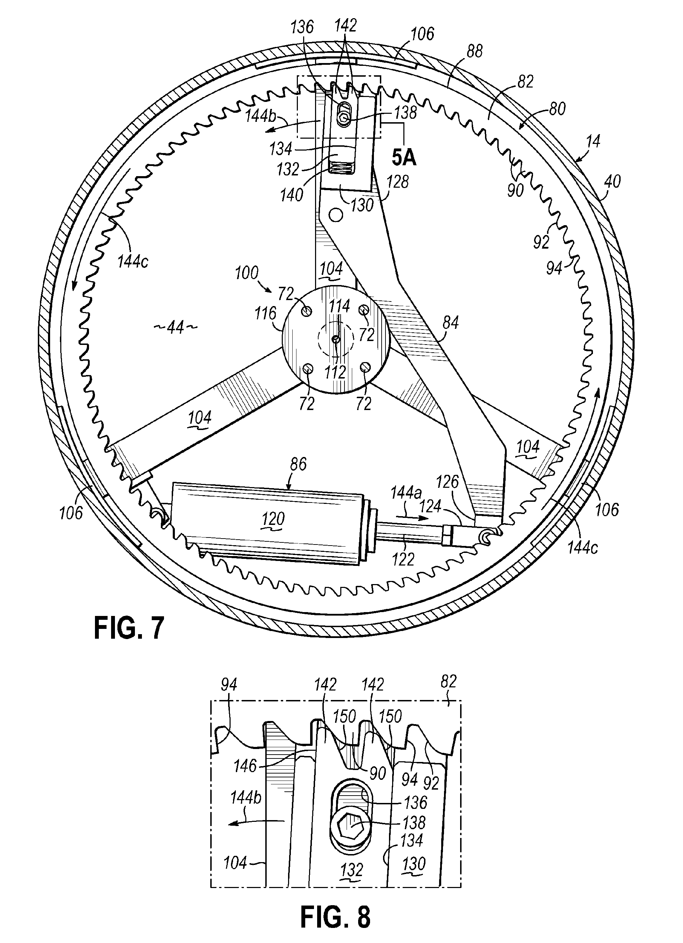

Now with reference to FIGS. 3 and 6, further features of the drive 80 used to rotate the sifter plate 30 are shown in detail. The drive 80 (also referred to a "drive mechanism") of this embodiment includes a ring gear 82 coupled to an underside of the sifter plate 30 and a ratcheting arm 84 operatively engaged with the ring gear 82. The ratcheting arm 84 may be driven by multiple types of devices, but the exemplary embodiment includes an air cylinder 86 coupled to the ratcheting arm 84 and configured to move the ratcheting arm 84 to drive rotation of the ring gear 82 and the sifter plate 30. The specific operation of the air cylinder 86 and ratcheting arm 84 are described in further detail with reference to FIGS. 7 through 11 below.

With continued reference to FIGS. 3 and 6, the ring gear 82 is coupled to the sifter plate 30 generally along the outer peripheral edge portion 36. The ring gear 82 is an internal toothed gear having a smooth outer gear periphery 88 and a plurality of gear teeth 90 along an inward periphery. Each of the gear teeth 90 defines a gently angled rear side 92 and a substantially radial front side 94 configured to enable one-way ratcheting or driving of the ring gear 82 with the ratcheting arm 84. It will be understood that the ring gear 82 and the gear teeth 90 may be resized or reconfigured in other embodiments without departing from the scope of the invention.

The drive 80 and the sifter disc 30 are supported by a support framework 100 that is coupled to the pump inlet chamber 14, thereby providing support from the plurality of support legs 16. More particularly, the support framework 100 includes a central bearing member 102 positioned and supported by a plurality of support beams 104 extending radially away from the central bearing member 102. On the opposite ends of the support beams 104 from the central bearing member 102, mounting plates 106 are provided to couple the support beams 104 to the pump inlet chamber 14, such as along the sidewall extension 40. The central bearing member 102 is hollow as shown in FIG. 3 and therefore receives a support shaft 108 extending downwardly from the central plate portion 34 of the sifter disc 30. The support shaft 108 includes a top platform 110 having a central pin 112 configured to be received in corresponding central apertures 114 formed in the sifter disc 30 and an optional bearing plate 116 located between the top platform 110 and the sifter disc 30. As shown in FIG. 3 and FIG. 6, the bearing plate 116 may be secured with the sifter disc 30 using a plurality of threaded fasteners 72 which are similar or identical to those used to couple the scoop-shaped blocks 60 to the sifter disc 30.

The support framework 100 therefore enables the sifter disc 30 and ring gear 82 to be fully supported and also rotatable within the pump inlet chamber 14. In this regard, either the support shaft 108 is designed to rotate within the central bearing member 102 or the bearing plate 116 is designed to rotate on top of the top platform 110, which enables the sifter disc 30 to rotate when driven by the drive 80. The support framework 100 also provides a mounting point for the drive 80, such as by pivotally coupling the air cylinder 86 to one of the mounting plates 106 or to one of the support beams 104, as shown in FIGS. 3 and 6. It will be understood that the support framework 100 may be reconfigured in other embodiments of the fill system 10 as long as the support provided enables rotation of the sifter plate 30 and reliable support of the bulk supply of adhesive solids sitting on top of the sifter plate 30. It is also advantageous in this and other embodiments to limit the amount of cross-sectional surface area within the pump inlet chamber 14 that is blocked by the support framework 100 so that the flow of fluidized adhesive solids downwardly into the pump inlet chamber 14 is not substantially blocked or impeded by the support framework 100. Furthermore, limiting the amount of cross-sectional surface area blocked by the support framework 100 also minimizes the amount of generally horizontal surfaces in the pump inlet chamber 14 upon which adhesive can potentially build up.

Additional details of the drive 80 and the functional operation thereof are illustrated with reference to FIGS. 7 through 11. As can be seen from these top-down views taken from just below the level of the sifter disc 30, the support framework 100 and the drive 80 do not block a substantial portion of the cross-sectional area defined by the pump inlet chamber 14 at these features. Consequently, the flow of fluidized adhesive solids out of the storage container 12 will not be significantly impacted by these structures within the pump inlet chamber 14. Also shown in these top-down views, the air cylinder 86 includes a primary cylinder housing 120 having one end pivotally connected to one of the support beams 104 adjacent to the corresponding mounting plate 106 and an extendible cylinder shaft 122 projecting from an opposite end of the primary cylinder housing 120. The extendible cylinder shaft 122 includes a free end 124 opposite the primary cylinder housing 120 and pivotally coupled to a first end 126 of the ratcheting arm 84. The ratcheting arm 84 extends generally across the pump inlet chamber 14 from the first end 126 to a second end 128, with the second end 128 carrying a receptacle block 130 and a spring-loaded engagement block 132 for interacting with the ring gear 82. Consequently, the air cylinder 86 is capable of moving the second end 128 of the ratcheting arm 84 by extending and retracting the cylinder shaft 122 relative to the primary cylinder housing 120.

The receptacle block 130 includes an elongate channel 134 in which the engagement block 132 resides. The engagement block 132 includes an elongate slot 136 that receives a retention pin 138 extending upwardly from the receptacle block 130 and into the elongate channel 134. A spring 140 is positioned in the elongate channel 134 behind the engagement block 132 so as to bias the engagement block 132 to move outwardly from the elongate channel 134 and into engagement with the gear teeth 90 on the ring gear 82. To this end, the engagement block 132 includes a pair of gear teeth 142 on an outwardly-facing surface having similar complementary profiles to the gear teeth 90 on the ring gear 82. These gear teeth 142 engage with the gear teeth 90 at all times as a result of the bias applied by the spring 140 within the elongate channel 134 of the receptacle block 130.

In order to move the sifter disc 30 through a partial rotation, the drive 80 operates as shown in FIGS. 7 and 8. To this end, the air cylinder 86 is actuated so that the extendible cylinder shaft 122 is extended outwardly from the primary cylinder housing 120 as indicated by arrow 144a in FIG. 7. This driving movement of the cylinder shaft 122 forces the first end 126 of the ratcheting arm 84 to pivot at the connection to the cylinder shaft 122, thereby also causing movement of the second end 128 of the ratcheting arm 84 to the left as shown by arrow 144b in FIGS. 7 and 8. As shown most clearly in the detailed view of the engagement of the gear teeth 90, 142 shown in FIG. 8, the leftward movement of the second end 128 of the ratcheting arm 84 tends to engage the substantially radial front sides 94 of the gear teeth 90 on the ring gear 82 with the substantially radial rear sides 146 on the gear teeth 142 on the engagement block 132. These substantially radial front and rear sides 94, 146 are not configured to ride over one another when the engagement block 132 moves to the left. As a result, the movement of the engagement block 132 forces the ring gear 82 to move to the left, or in this case, rotate in a counterclockwise orientation as shown by arrow 144c. Accordingly, the extension of the cylinder shaft 122 causes the ratcheting arm 84 to drive the ring gear 82 through a partial rotation, which also causes the sifter plate 30 to move through a partial rotation against the bulk supply of adhesive solids.

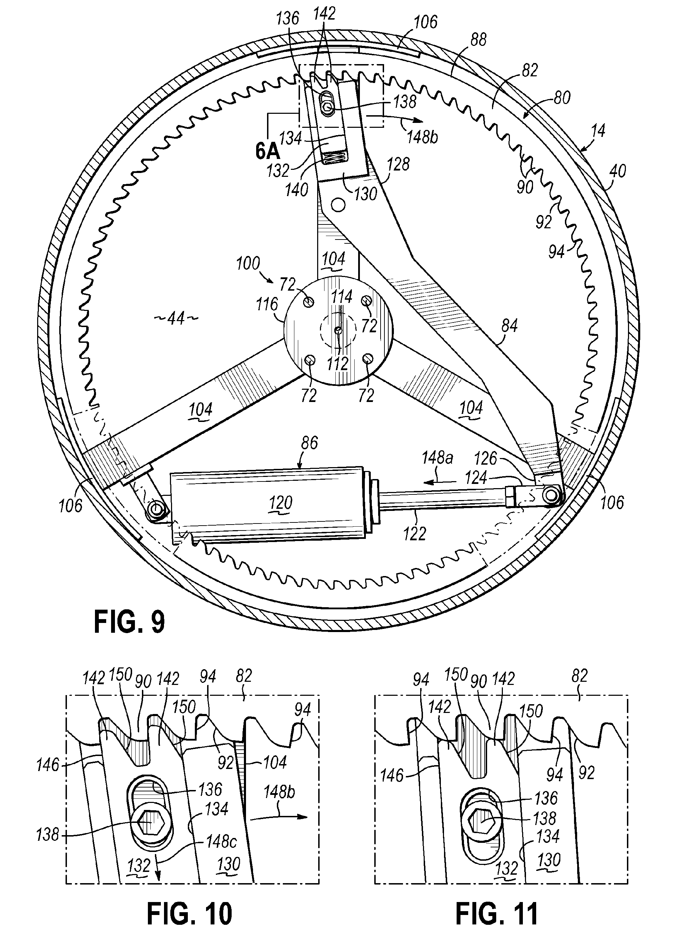

The drive 80 must then return to the original state so that the ring gear 82 can continue to be driven to sift adhesive solids from the bulk supply if desired. This return movement is shown in FIGS. 9 through 11. From the extended position shown in FIG. 9, the air cylinder 86 may be actuated to withdraw the extendible cylinder shaft 122 back within the primary cylinder housing 120, as indicated by arrow 148a. This movement of the cylinder shaft 122 again forces the first end 126 of the ratcheting arm 84 to pivot at the connection to the cylinder shaft 122, which also causes the second end 128 of the ratcheting arm 84 to move rightward as indicated by arrow 148b. When the engagement block 132 is moved to the right with the second end 128 of the ratcheting arm 84, gently angled sides 150 of the gear teeth 142 on the engagement block 132 engage with and ride over the complementary gently angled rear sides 92 of the gear teeth 90 on the ring gear 82.

To this end, and as shown in FIGS. 10 and 11, the engagement block 132 is thus forced to move inwardly along arrow 148c against the bias of spring 140 and into the elongate channel 134 on the receptacle block 130 when the gear teeth 90, 142 ride over one another. This movement of the gear teeth 142 forms a ratcheting action along the gear teeth 90 of the ring gear 82, and the ring gear 82 remains stationary during this movement of the engagement block 132 and the ratcheting arm 84. The inward and outward movement of the engagement block 132 and the corresponding movements of the retention pin 138 within the elongate slot 136 are repeated for each gear tooth 90 on the ring gear 82 that the engagement block 132 ratchets past during the return movement. Once the extendible cylinder shaft 122 is fully retracted back to the original position and the engagement block 132 has also moved back to the original position (shown in FIG. 7), the process may be repeated to continue rotating the ring gear 82 and the sifter plate 30. As described above, these partial rotations of the sifter plate 30 cause adhesive solids to be separated from the bulk supply so that a flow of fluidized adhesive solids moves from the storage container 12 into the pump inlet chamber 14.

As such, the drive 80 enables delivery of the adhesive solids on demand from the pumps 20 and melters. The drive 80 may be modified in various ways in other embodiments, such as by including an electric motor to drive the ring gear 82 rather than the ratcheting arm 84 and air cylinder 86. Furthermore, additional elements to assist with efficient operation of the drive 80 may also be included, such as, for example, a torsion spring that assists the air cylinder 86 in returning the ratcheting arm 84 to the original position in FIGS. 7 and 8. Regardless of the particular drive 80 used with the fill system 10, the advantageous benefits of supplying adhesive solids to the pumps 20 only when required remain a feature of this fill system 10.

As mentioned above, the flow of fluidized adhesive solids separated from the bulk supply 162 within the storage container 12 may also selectively flow into the pump inlet chamber 14 around the outer peripheral edge portion 36 of the sifter plate 30. To this end, the adhesive solids may also be sifted from the bulk supply along the outermost edges at the bottom end 18 of the storage container 12. This additional sifting process is shown in FIGS. 12 and 13, which show the flow of fluidized adhesive solids 160 over the outermost peripheral edge 32 of the sifter plate 30 during rotation of the sifter plate 30 and a termination of flow when the sifter plate stops rotating, respectively.

To this end, the gap 42 along the outer peripheral edge portion 36 is sized to restrict flow of the adhesive solids 160 unless the sifter plate 30 is rotating. When the sifter plate 30 rotates, as indicated in FIG. 12, the loose adhesive solids 160 at the bottom of the bulk supply 162 are forced radially outwardly by the application of centrifugal force. In this regard, the adhesive solids 160 first move horizontally in a similar manner as those adhesive solids 160 that are drawn into the scoop-shaped blocks 60 for delivery through the elongate slots 68. As long as the sifter plate 30 rotates, a supply of the adhesive solids 160 is forced over the outermost peripheral edge 32 and falls into the pump inlet chamber 14 as shown in FIG. 12. The additional sifting action along the outer peripheral edge portion 36 increases the amount of adhesive solids 160 that may be delivered for each partial rotation of the sifter plate 30, and therefore may be used to increase the speed and/or efficiency of the fill system 10.

As described briefly above, the gap 42 is sized so as to restrict the flow of fluidized adhesive solids 160 when the sifter plate 30 is not moving. More specifically, the gap 42 is sized relative to the angle of repose defined by the adhesive solids 160 being retained within the storage container 12 such that flow of fluidized adhesive solids 160 is stopped when the sifter plate 30 is not moving. This stopped flow state is shown in FIG. 13, for example. As shown in that Figure, the adhesive solids 160 flow when unrestricted to make a pyramid-shaped pile with sides defined by an angle of repose from the support surface (in this case, the angle of repose is measured from the sifter plate 30). But the gap 42 is dimensioned such that adhesive solids 160 flowing from the bottom end 18 of the storage container 12 and onto the outer peripheral edge portion 36 of the sifter plate 30 will not reach the outermost peripheral edge 32 of the sifter plate 30. Instead, the flow of fluidized adhesive solids 160 will terminate with the bulk supply 162 defining the angle of repose for the adhesive solids 160 adjacent to the gap 42 and the bottom end 18. Until the sifter plate 30 is rotated by the drive 80 once again, the adhesive solids 160 will remain in the steady state shown in FIG. 13. It will be understood that a residual amount of the flow of fluidized adhesive solids 160 may continue for a brief period of time following the stopped movement of the sifter plate 30 to allow for the adhesive solids 160 to settle within the storage container 12 to the pyramid-shaped pile static position shown in FIG. 13, but this relatively quick stoppage of flow is what is considered to be stopping the flow of fluidized adhesive solids 160 when the sifter plate 30 stops rotating.

One example of the relevant angles and distances defined by the gap 42 at the sidewall extension 40 and the sifter plate 30 is shown in FIG. 13. To this end, the gap 42 is defined by "a" and "b" distances, which correspond to ("a") the height of the gap 42 and ("b") the length of the outer peripheral edge portion 36 located beyond the outer circumference of the bottom end 18 of the storage container 12. In the exemplary embodiment, the "a" distance is about 0.5 inch and the "b" distance is about 1.5 inches, which generates a gap angle (θ) of about 20 degrees (these distances and angles may not be shown to scale in the FIGS.). By contrast, a typical angle of repose (α) for the adhesive solids 160 is larger, such as 30 to 40 degrees. In view of the smaller angle or larger horizontal distance defined by the gap angle (θ) compared to the angle of repose (α), the adhesive solids 160 pile up and stop flowing at a location short of the outermost peripheral edge 32. Therefore, the restriction of flow caused by the gap 42 actually terminates flow of the adhesive solids 160 when the sifter plate 30 is not rotating.

It will be understood that the specific angles and "a" and "b" dimensions provided above are exemplary only and may be modified to suit the needs of the end user of the fill system 10. For example, some adhesive compositions and pellet shapes define different angles of repose, and the gap 42 can be adjusted by modifying the "a" and "b" distances to assure restriction of flow of fluidized adhesive solids 160 between rotation movements of the sifter plate 30. It will also be appreciated that the positioning of the elongate slots 68 in the sifter plate 30 relative to the openings 70 in the scoop-shaped blocks 60 may also be modified to accommodate adhesive compositions defining different angles of repose. Indeed, the combination of selective sifting of the bulk supply 162 using the relative motion produced by the sifter plate 30 and restriction of flow of fluidized adhesive solids 160 based on the angle of repose contributes to the advantageous operation of the fill system 10, which minimizes adhesive clumps and blockage issues in the pump inlet chamber 14 by delivering adhesive only on demand.

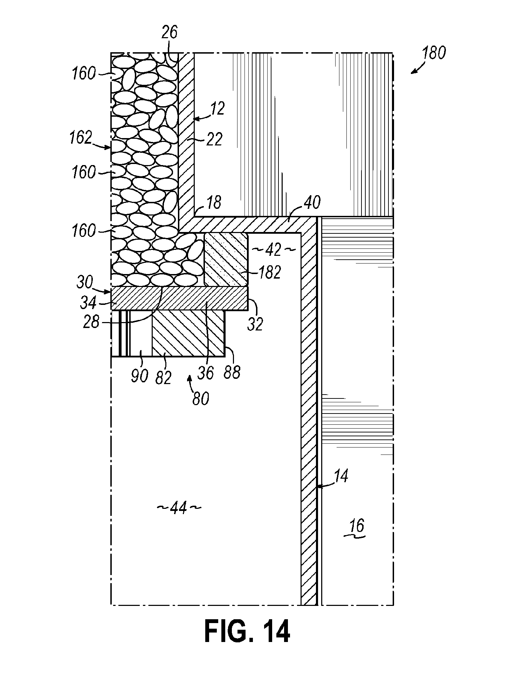

With reference to FIG. 14, one alternative design for a fill system 180 includes a blocking member 182 inserted into the gap 42 to prevent all flow of fluidized adhesive solids 160 around the outermost peripheral edge 32 of the sifter plate 30. The blocking member 182 is shown as an annular block of material having a rectangular-shaped cross section, but alternative designs for the blocking member 182 are also possible within the scope of the invention. The blocking member 182 may be formed from felt or a similar material that does not generate significant friction when rotating against either the sidewall extension 40 (when the blocking member 182 is coupled to the sifter plate 30) or against the sifter plate 30 (when the blocking member 182 is secured to the sidewall extension 40). The blocking member 182 prevents flow of fluidized adhesive solids 160 around the outermost peripheral edge 32 both when the sifter plate 30 is rotating and when the sifter plate 30 is stationary.

In such embodiments, the only flow path for adhesive solids 160 being sifted or separated from the bulk supply 162 is through the apertures (e.g., elongate slots 68) provided through the central plate portion 34 of the sifter plate 30. Use of the blocking member 182 may be desirable when the total amount of adhesive solids 160 delivered to the pump inlet chamber 14 per relative rotation of the sifter disc 30 is to be throttled or minimized further. Of course, the blocking member 182 could also be configured to be removable so that the gap 42 is used to sift only certain types of adhesive solids 160 that are delivered using the fill system 180.

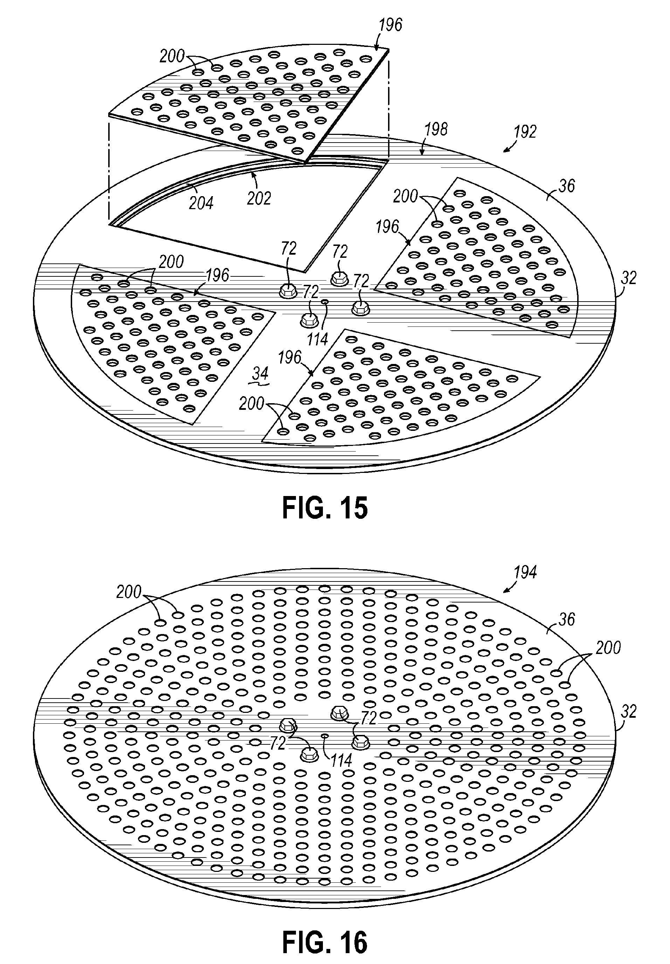

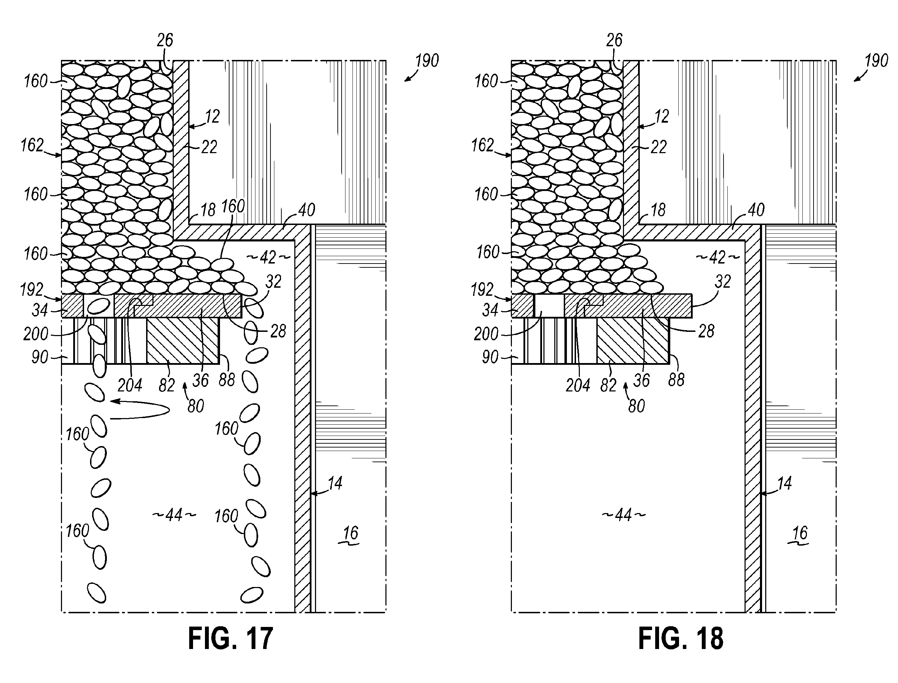

It will be understood that some types of adhesive solids 160 cannot be sifted or processed effectively using the scoop-shaped blocks 60 on the sifter plate 30. These adhesive solids 160, as a result of their specific adhesive composition or pellet configuration, may instead require sifting with alternative designs of sifter plates 192, 194. To this end, alternative embodiments of the fill system 190 may include either the sifter plate 192 shown in FIG. 15 or the similar sifter plate 194 shown in FIG. 16. The sifting operation of both of these types of sifter plates 192, 194 will be described in further detail with reference to FIGS. 17 and 18 below.

The sifter plate 192 of the alternative embodiment shown in FIG. 15 includes a plurality of perforated inserts 196 or panels that are coupled to a solid remainder 198 of the sifter plate 192. Each of the perforated inserts 196 includes a plurality of apertures 200 that are configured to sift across a bottom surface 28 of the bulk supply 162 to produce the relative motion necessary to separate adhesive solids 160 from the bulk supply 162 and flow those adhesive solids 160 out of the storage container 12. The plurality of apertures 200 are generally evenly arranged along the sifter plate 192 so that the bottom surface 28 of the bulk supply 162 is sifted generally evenly across the entire sifter plate 192. The perforated inserts 196 are pie-piece shaped in the embodiment shown in FIG. 15, but it will be understood that the total number of perforated inserts 196 and the shape and size of those perforated inserts 196 can be modified in other embodiments of the sifter plate 192.

As shown in FIG. 15, the perforated inserts 196 are configured to sit flush within insert receptacles 202 formed in the remainder 198 of the sifter plate 192. The perforated inserts 196 and the remainder 198 of the sifter plate 192 collectively define a sifting surface to face towards the storage container 12. For example, the insert receptacles 202 may include an internal shoulder 204 around a periphery upon which the perforated inserts 196 sit when positioned in the sifter plate 192. Of course, alternative methods of securing the perforated inserts 196 flush with the remainder 198 of the sifter plate 192 may also be used in other embodiments. The remainder of the sifter plate 192 is formed in the same manner as the sifter plate 30 in the previous embodiment (without the scoop-shaped blocks 60), and the same reference numbers have been used to describe similar elements in this embodiment without further explanation. For example, the sifter plates 192, 194 of the alternative embodiments shown in FIGS. 15 and 16 each include a central plate portion 34 and an outer peripheral edge portion 36.

Turning with reference to FIG. 16, the sifter plate 194 of this embodiment includes perforations or a plurality of apertures 200 along an entirety of the sifter plate 194. Similar to the sifter plates 30, 192 of the previous embodiments, the plurality of apertures 200 is formed so as to sift evenly across the surface of the sifter plate 194 and the bottom surface 28 of the bulk supply 162. By forming the apertures 200 directly in a single-piece sifter plate 194 in this embodiment, the assembly and manufacturing of the sifter plate 194 is simplified compared to previous embodiments (where multiple elements need to be manufactured and secured together). However, the sifter plate 194 of this embodiment cannot have the perforated portions replaced by alternative perforated inserts 196 or inserts with scoop-shaped blocks 60, as is the case when using the previously-described embodiment of the sifter plate 192. Regardless of the particular embodiment chosen, the sifter plates 192, 194 in FIGS. 15 and 16 provide a different type of sifting action that works more efficiently with certain types of adhesive solids 160.

In these embodiments of the sifter plate 192, 194, it will be understood that the size or diameter of the apertures 200 must be closely tailored to complement the average size or diameter of the adhesive solids 160 being delivered by the fill system 190. To this end, the apertures 200 must be large enough to enable sifting action against the bulk supply 162 and flow of fluidized adhesive solids 160 during movement of the sifter plates 192, 194, but small enough to restrict and stop the flow of fluidized adhesive solids 160 when the sifter plates 192, 194 stop moving. Consequently, the apertures 200 need to be sized larger than the average diameter of the adhesive solids 160 but smaller than twice the average diameter, so that bridging of adhesive solids 160 may occur to stop flow when the sifter plates 192, 194 stop moving. In one particular example, the average diameter of the pellets defining the adhesive solids 160 may be 3/16 inch, while the diameter of the apertures 200 may be ¼ inch. The size of the apertures 200 will be modified depending on the type of adhesive solids 160 that are to be sifted and moved using this fill system 190.

The operational functionality of the sifter plates 192, 194 in these embodiments is shown in further detail in FIGS. 17 and 18. As noted above, these embodiments of the fill system 190 and sifter plates 192, 194 include many of the same features described above for the first embodiment and identical elements have been labeled with the same reference numbers. As shown in FIG. 17, the sifter plate 192 (sifter plate 194 would be the same) is rotated using the ring gear 82 of the drive 80 previously described. During this rotation, the apertures 200 sift across the bulk supply 162 to separate and cause flow of fluidized adhesive solids 160 through the apertures 200 and into the pump inlet chamber 14 as shown. Of course, in embodiments without the felt blocking member 182, the adhesive solids 160 will also flow through the gap 42 over the outer peripheral edge portion 36 as well during the rotation of the sifter plate 192.

When the rotation of the sifter plate 192 stops as shown in FIG. 18, the adhesive solids 160 stop being forced to flow horizontally through the gap 42. In addition, any remaining flow of fluidized adhesive solids 160 through the apertures 200 in the sifter plate 192 tapers off and stops once the adhesive solids 160 settle to a bridged orientation over the apertures 200 as shown in FIG. 18. This bridging of two or more adhesive solids 160 occurs relatively quickly after the sifter plate 192 stops rotating, so the flow of fluidized adhesive solids 160 is restricted or stopped in much the same way as the previous embodiments, enabling the delivery of adhesive solids 160 only on demand. Accordingly, the sifter plates 192, 194 of these embodiments provide the same advantageous operation for the fill system 190 as previously described.

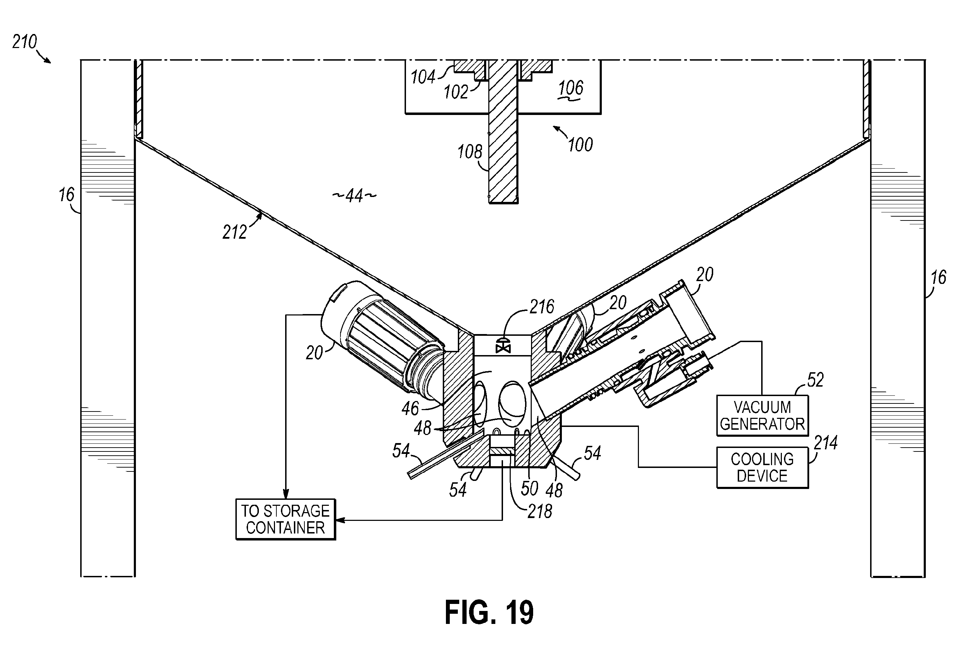

An additional alternative embodiment of the fill system 210 is shown in FIG. 19. In this embodiment, the fill system 210 includes a modified pump inlet chamber 212 that includes a plurality of additional elements used as pump inlet clearing devices. As with the previously-described embodiment, the pump inlet chamber 212 of FIG. 19 includes a similar upper chamber portion 44 that funnels downwardly to a lower chamber portion 46 communicating with multiple pumps 20. Also similar to the previous embodiment, vacuum generators 52 of the pumps 20 and eductors 54 for blowing compressed air jets may be used as pump inlet clearing devices to remove all adhesive solids 160 from the lower chamber portion 46 between operational cycles of the pumps 20 (e.g., such as by returning residual adhesive solids 160 back to the storage container 12). The additional elements shown in FIG. 19 may be used as alternatives to the vacuum generators 52 and eductors 54 or in addition to these elements, based on the preferences of the end user.

To this end, the fill system 210 includes a cooling device 214 operatively coupled to the pump inlet chamber 212. The cooling device 214 provides refrigeration or cooling energy to any adhesive solids 160 located in the pump inlet chamber 212, especially within the lower chamber portion 46. This cooling energy is configured to prevent coalescing of the adhesive solids 160 into a solidified mass that would block the inlets 48 to the pumps 20. The fill system 210 also includes a control valve 216 located between the upper chamber portion 44 and the lower chamber portion 46, the control valve 216 functioning to selectively enable flow of the adhesive solids 160 flowing in the upper chamber portion 44 to enter the lower chamber portion 46. Thus, if the control valve 216 is selectively opened and closed, only controlled amounts of adhesive solids 160 fill the space adjacent the inlets to the pumps 20 in the lower chamber portion 46. To this end, embodiments including the control valve 216 have another fallback control to avoid flooding of adhesive at the pumps 20 even when the upper chamber portion 44 of the pump inlet chamber 212 is flooded with more adhesive solids 160 than normally desired.

The fill system 210 may also include multiple types of agitation devices that serve to remove the adhesive solids 160 from the lower chamber portion 46 between operational cycles of the pumps 20. More specifically, the lower chamber portion 46 may include a discharge valve 218 located at the bottom end 50 of the lower chamber portion 46. The discharge valve 218 may selectively open when adhesive solids 160 are left within the lower chamber portion 46 between operational cycles of the pumps 20, thereby removing the adhesive solids 160 from the location where coalescing into solidified masses causes the most concern. The removed adhesive solids 160 may be supplied back to the storage container 12 (such as with a pump) after flowing through the discharge valve 218. Of course, it will be understood that one of the five pumps 20 and its associated eductor 54 already shown in the FIGS. could be dedicated to this function of removing any excess adhesive solids 160 from the lower chamber portion between operational cycles of the other four pumps 20 as described briefly above, in other embodiments.

Therefore, by using one or a plurality of the pump inlet clearing devices, the lower chamber portion 46 and the pump inlet chamber 212 can be assured to not be filled up and blocked by coalesced or solidified adhesive masses between operational cycles of the pumps 20. It will be understood that any combination of these pump inlet clearing devices may be used, even in alternative fill systems including structures different than a rotary sifter plate 30.

Regardless of which embodiment of the fill systems described above is chosen, an advantageous operation is provided for storing and moving adhesive solids to an adhesive melter while avoiding the various problems that may result from clogged transfer pumps. To this end, an open space is maintained within the interior of the chamber communicating with the transfer pumps, which is the examples provided above is the pump inlet chamber. This open space entrains make-up gas which can be drawn by the transfer pumps, when those are actuated to generate a vacuum at the corresponding pump inlet(s), to remove the adhesive solids on demand from the pump inlet chamber to the adhesive melter(s). In one particular method, the flow of adhesive solids into the pump inlet chamber is metered or controlled so as to avoid flooding the pump inlet chambers with so much adhesive solids that the open space is filled with adhesive solids. That arrangement avoids the need for the transfer pumps to draw make-up air or gas through a large amount of stacked adhesive solids (e.g., from the top of the bulk supply in the storage container). The control of the flow of adhesive solids can be provided by positive start/stop control of the generation of flow delivered into the pump inlet chamber on demand, use of the various pump inlet clearing devices described above between pump operational cycles, blocking or restricting flow using valves, adjustable-sized gaps, or similar structures for the adhesive solids to move through when flowing to the pump inlet chamber, and/or provision of solid structures like shrouds and screened walls to ensure the open space is available and unfilled with adhesive solids proximate the inlets of the transfer pumps. The fluidization of the adhesive solids may also be maintained at the pump inlet chamber by agitating the adhesive solids, such as with a vibration device proximate the inlets of the transfer pumps, in one example.

As a result of the combination of any or all of these features, clumps or coalesced masses of solidified adhesive that would tend to block air flow into the transfer pumps are avoided in the pump inlet chamber, and the transfer pumps are not unduly stressed when creating vacuum forces to supply the adhesive solids on demand to the adhesive melter(s). More specifically, the various combinations of internal and external manipulations and control of the adhesive solids ensures that the adhesive solids are reliably fluidized regardless of unfavorable environmental conditions like high ambient temperatures or unfavorable operational conditions like high compacting forces applied by the weight of the adhesive solids, which would otherwise tend to cause sticking together and coalescing of the adhesive solids into bigger masses that could clog the transfer pumps. Accordingly, the reliability of the adhesive storage and supply system is improved, reducing any potential system downtime for maintenance or other upkeep activities. Furthermore, the consistency of the adhesive supply is maintained regardless of the level of adhesive within the bulk supply at the storage container, which typically causes variations in the actual amount of adhesive supplied to the adhesive melters depending on the level of bulk adhesive supply.

Consequently, the fill systems of the invention described above are capable of supplying adhesive solids on demand to pneumatic pumps or other supply mechanisms used with adhesive melters and dispensing units. The fill systems enable adhesives of most types of formulations, including the more malleable adhesives like rubber-based formulations, to be supplied to the melters. As a result of the relative movement or sifting action generated by the fill system, even adhesive solids that are known to be non-free flowing can be supplied without significant manual or operator intervention. Furthermore, the fill system may be used in non-favorable system environments such as those with higher ambient temperatures. Thus, the fill systems described herein improve the efficiency and the autonomous nature of current adhesive dispensing systems.

A fill system retains and transfers adhesive solids of different types and compositions to adhesive melter(s). The fill system includes a storage container for holding a bulk supply of adhesive solids and a separating element such as a sifter plate for moving relative to one of the surfaces of the bulk supply. A drive rotates or otherwise moves the sifter plate against the surface of the bulk supply to separate a flow of fluidized adhesive solids from the bulk supply and then controllably deliver this flow to one or more pumps feeding the melter(s). When the drive stops rotating the sifter plate, the flow of fluidized adhesive solids is stopped from moving out of the storage container. Thus, the fill system provides adhesive solids on demand to pumps and reduces the risk of pumps being starved for air or clogged with coalesced masses of adhesive.

### The invention is further described by the following embodiments, wherein:

Embodiment 1. A fill system configured to retain and transfer adhesive solids to an adhesive melter, the fill system comprising:
   a storage container for containing a bulk supply of adhesive solids;
   a separating element positioned proximate to said storage container and configured to engage at least one surface of the bulk supply and move relative to the at least one surface to cause separation of adhesive solids from the bulk supply and produce a flow of fluidized adhesive solids from said storage container;
   a drive coupled to at least one of said storage container or said separating element, said drive operable to create the relative motion between said separating element and the at least one surface of the bulk supply, wherein the flow of fluidized adhesive solids stops exiting said storage container when said drive stops creating the relative motion between said separating element and the at least one surface of the bulk supply.
Embodiment 2. The fill system with the features of embodiment 1, wherein said storage container includes at least one sidewall extending between a top opening and a bottom end, and said at least one sidewall is formed from or coated with a friction reducing material facing towards the bulk supply of adhesive solids.
Embodiment 3. The fill system with the features of embodiment 1, wherein said storage container includes at least one sidewall extending between a top opening and a bottom end, and said at least one sidewall is angled slightly outwardly such that said top opening is smaller than said bottom end of said storage container.
Embodiment 4. The fill system with the features of embodiment 1, further comprising:
   a pump inlet chamber communicating with said storage container and configured to receive the flow of fluidized adhesive solids that has been separated from the bulk supply by said separating element; and
   at least one pump communicating with said pump inlet chamber and configured to remove the flow of fluidized adhesive solids from said pump inlet chamber and deliver the flow of fluidized adhesive solids to the adhesive melter.
Embodiment 5. The fill system with the features of embodiment 4, wherein said pump inlet chamber includes a lower chamber portion adjacent to said at least one pump and an upper chamber portion extending between said lower chamber portion and said storage container, and the fill system further comprises:
   a pump inlet clearing device associated with said pump inlet chamber and configured to keep said lower chamber portion clear of solidified masses formed by the flow of fluidized adhesive solids between operational cycles of said at least one pump.
Embodiment 6. The fill system with the features of embodiment 5, wherein said pump inlet clearing device further comprises:
   a cooling device operatively coupled to said pump inlet chamber so as to provide cooling energy to prevent the adhesive solids in said lower chamber portion from coalescing into solidified masses.
Embodiment 7. The fill system with the features of embodiment 5, wherein said pump inlet clearing device further comprises:
   an agitation device associated with said pump inlet chamber and operative to remove the adhesive solids from said lower chamber portion by actuating a flow of the adhesive solids to the adhesive melter or back to said storage container.
Embodiment 8. The fill system with the features of embodiment 5, wherein said pump inlet clearing device further comprises:
   a control valve located between said upper chamber portion and said lower chamber portion to selectively control flow of the adhesive solids into said lower chamber portion.
Embodiment 9. The fill system with the features of embodiment 1, wherein:
   said storage container includes a top opening, a bottom end, and at least one stationary sidewall extending between said top opening and said bottom end;
   said separating element includes a sifter plate positioned proximate to said bottom end of said storage container, said sifter plate including at least one aperture providing a flow path out of said storage container for the flow of fluidized adhesive solids; and
   said drive is configured to rotate said sifter plate to produce the relative motion of said sifter plate against the bulk supply of adhesive solids to generate the flow of fluidized adhesive solids.
Embodiment 10. The fill system with the features of embodiment 9, wherein said sifter plate includes an outer peripheral edge portion that is larger in size than said bottom end of said storage container, and the fill system further comprises:
   a sidewall extension projecting outwardly and downwardly from said at least one stationary sidewall at said bottom end so as to provide a gap between said outer peripheral edge portion of said sifter plate and said sidewall extension, the gap being sized to receive the flow of fluidized adhesive solids during the relative motion produced by said drive and sized to stop the flow of fluidized adhesive solids from exiting said storage container when said separating element stops moving relative to the bulk supply of adhesive solids.
Embodiment 11. A fill system configured to retain and transfer adhesive solids to an adhesive melter, the fill system comprising:
   a storage container for containing a bulk supply of adhesive solids, said storage container including at least one stationary sidewall and a bottom end;
   a sifter plate positioned proximate to said bottom end of said storage container, said sifter plate including at least one aperture; and
   a drive operatively coupled to said sifter plate and configured to selectively rotate said sifter plate to produce a relative motion against a bottom surface of the bulk supply of adhesive solids facing towards said sifter plate, the relative motion separating adhesive solids from the bulk supply to generate a flow of fluidized adhesive solids, at least a portion of which moves out of said storage container through said at least one aperture for transfer to the adhesive melter, and wherein the flow of fluidized adhesive solids out of said storage container is stopped when said drive stops rotating said sifter plate.
Embodiment 12. The fill system with the features of embodiment 11, wherein said sifter plate is a circular sifter disc.
Embodiment 13. The fill system with the features of embodiment 12, wherein said sifter disc includes an outer peripheral edge portion that is larger in size than said bottom end of said storage container, and the fill system further comprises:
   a sidewall extension projecting outwardly and downwardly from said at least one sidewall at said bottom end so as to provide a gap between said outer peripheral edge portion of said sifter disc and said sidewall extension, the gap being sized to receive at least a portion of the flow of fluidized adhesive solids moving out of said storage container during the relative motion produced by said sifter disc.
Embodiment 14. The fill system with the features of embodiment 13, wherein said outer peripheral edge portion and said gap define a gap angle through which the flow of fluidized adhesive solids must move to exit said storage container, the gap angle being less than an angle of repose defined by the adhesive solids so that the flow of fluidized adhesive solids from said storage container is stopped when said sifter disc stops rotating.
Embodiment 15. The fill system with the features of embodiment 13, further comprising:
   a blocking member inserted into the gap between said outer peripheral edge portion and said sidewall extension, said blocking member preventing the flow of fluidized adhesive solids from exiting said storage container through the gap.
Embodiment 16. The fill system with the features of embodiment 11, wherein said at least one aperture is positioned on said sifter plate to sift the bulk supply of adhesive solids evenly across the bottom surface of the bulk supply of adhesive solids.
Embodiment 17. The fill system with the features of embodiment 11, wherein said at least one aperture in said sifter plate includes a plurality of elongate slots extending through said sifter plate.
Embodiment 18. The fill system with the features of embodiment 17, wherein said sifter plate further comprises:
   a plurality of scoop-shaped blocks, each positioned over at least one of said plurality of elongate slots and each including a top plate that is spaced above said respective elongate slots such that the flow of fluidized adhesive solids is forced to move horizontally through said scoop-shaped block to access said respective elongate slots.
Embodiment 19. The fill system with the features of embodiment 18, wherein each of said scoop-shaped blocks defines an opening and said top plate is sharpened at a leading edge adjacent to said opening to cut through the bulk supply of adhesive solids during rotation of said sifter plate.
Embodiment 20. The fill system with the features of embodiment 11, wherein said sifter plate is at least partially perforated so as to define a plurality of apertures.
Embodiment 21. The fill system with the features of embodiment 20, wherein said sifter plate includes a plurality of perforated inserts coupled to a remainder of said sifter plate so as to provide a generally planar sifting surface facing the bulk supply of adhesive solids.
Embodiment 22. The fill system with the features of embodiment 21, wherein said perforated inserts are pie-piece shaped so as to sift the bulk supply of adhesive solids evenly across said sifting surface.
Embodiment 23. The fill system with the features of embodiment 20, wherein an entirety of said sifter plate is perforated to define said plurality of apertures.
Embodiment 24. The fill system with the features of embodiment 20, wherein each of said plurality of apertures is sized larger than an average diameter of the adhesive solids and smaller than twice an average diameter of the adhesive solids to enable the flow of fluidized adhesive solids through said plurality of apertures only during rotation of said sifter plate.
Embodiment 25. The fill system with the features of embodiment 11, wherein said drive further comprises:
   a ring gear coupled to said sifter plate; and
   a ratcheting arm engaged with said ring gear and operative to drive said ring gear through a partial rotation to rotate said sifter plate.
Embodiment 26. The fill system with the features of embodiment 25, wherein said drive further comprises:
   an air cylinder coupled to said ratcheting arm and operative to push said ratcheting arm to drive said ring gear through the partial rotation.
Embodiment 27. The fill system with the features of embodiment 25, wherein said ratcheting arm includes an engagement block having teeth configured to engaged said ring gear, said engagement block being spring-biased into engagement with said ring gear.
Embodiment 28. The fill system with the features of embodiment 11, further comprising:
   a pump inlet chamber communicating with said storage container and configured to receive the flow of fluidized adhesive solids that has been separated from the bulk supply by rotation of said sifter plate; and
   at least one pump communicating with said pump inlet chamber and configured to remove the flow of fluidized adhesive solids from said pump inlet chamber and deliver the flow of fluidized adhesive solids to the adhesive melter.
Embodiment 29. The fill system with the features of embodiment 28, wherein said pump inlet chamber includes a lower chamber portion adjacent to said at least one pump and an upper chamber portion extending between said lower chamber portion and said storage container, and said lower chamber portion is a cylindrical tube defining a diameter about equal to an inlet diameter for each of said at least one pump.
Embodiment 30. The fill system with the features of embodiment 29, further comprising:
   a pump inlet clearing device associated with said pump inlet chamber and configured to keep said lower chamber portion clear of solidified masses formed by the flow of fluidized adhesive solids between operational cycles of said at least one pump.
Embodiment 31. The fill system with the features of embodiment 30, wherein said pump inlet clearing device further comprises an eductor positioned adjacent to said at least one pump and configured to generate a compressed air jet that pushes adhesive solids into said at least one pump and out of said lower chamber portion.
Embodiment 32. The fill system with the features of embodiment 11, wherein said storage container includes a top opening, said at least one stationary sidewall extends between said top opening and said bottom end, and said at least one stationary sidewall is formed from or coated with a friction reducing material facing towards the bulk supply of adhesive solids.
Embodiment 33. The fill system with the features of embodiment 32, wherein said at least one stationary sidewall is angled slightly outwardly such that said top opening is smaller than said bottom end of said storage container.
Embodiment 34. The fill system with the features of embodiment 11, wherein said at least one stationary sidewall defines a non-circular cross section to discourage unified bulk rotation of the bulk supply of adhesive solids.
Embodiment 35. A method of transferring adhesive solids to an adhesive melter with a fill system including a storage container, a separating element, and a drive coupled to at least one of the storage container or the separating element, the method comprising:
   storing a bulk supply of adhesive solids within the storage container;
   engaging the separating element with at least one surface of the bulk supply of adhesive solids;
   moving at least one of the storage container or the separating element with the drive to produce relative motion between the separating element and the at least one surface of the bulk supply, the relative motion separating adhesive solids from the bulk supply to generate a flow of fluidized adhesive solids that moves out of the storage container; and
   stopping the relative motion produced with the drive to stop the flow of fluidized adhesive solids out of the storage container.
Embodiment 36. The method with the features of embodiment 35, wherein the fill system also includes a pump inlet chamber communicating with the storage container and at least one pump communicating with the pump inlet chamber, and moving at least one of the storage container or the separating element further comprises:
   supplying the flow of fluidized adhesive solids that moves out of the storage container into the pump inlet chamber; and
   removing the flow of fluidized adhesive solids in the pump inlet chamber with the at least one pump to deliver the adhesive solids to the adhesive melter.
Embodiment 37. The method with the features of embodiment 36, wherein the adhesive solids are supplied on demand to the at least one pump, thereby maintaining the pump inlet chamber clear of adhesive solids between operating cycles of the at least one pump.
Embodiment 38. The method with the features of embodiment 36, further comprising:
   clearing the pump inlet chamber between operating cycles of the at least one pump to prevent coalesced solidified masses of the adhesive solids from developing.
Embodiment 39. The method with the features of embodiment 38, wherein clearing the pump inlet chamber further comprises:
   cooling the adhesive solids located in the pump inlet chamber between operating cycles of the at least one pump to prevent the adhesive solids from coalescing into solidified masses proximate the at least one pump.
Embodiment 40. The method with the features of embodiment 38, wherein clearing the pump inlet chamber further comprises:
   agitating the adhesive solids located in the pump inlet chamber between operating cycles of the at least one pump to prevent the adhesive solids from coalescing into solidified masses proximate the at least one pump.
Embodiment 41. The method with the features of embodiment 40, wherein agitating the adhesive solids further comprises:
   removing the adhesive solids from the pump inlet chamber by actuating a flow of the adhesive solids to the adhesive melter or back to the storage container.
Embodiment 42. The method with the features of embodiment 38, wherein the pump inlet chamber includes a lower chamber portion adjacent to the at least one pump and an upper chamber portion extending between the lower chamber portion and the storage container, and clearing the pump inlet chamber further comprises:
   selectively controlling flow of the adhesive solids into the lower chamber portion with a control valve located between the upper chamber portion and the lower chamber portion.
Embodiment 43. The method with the features of embodiment 35, wherein the separating element includes a sifter plate including at least one aperture, and moving at least one of the storage container or the separating element further comprises:
   rotating the sifter plate with the drive to produce relative motion against a bottom surface of the bulk supply of adhesive solids, the relative motion separating adhesive solids from the bulk supply to generate a flow of fluidized adhesive solids, at least a portion of which moves out of the storage container through the at least one aperture; and
   stopping the flow of fluidized adhesive solids from moving out of the storage container when the sifter plate stops rotating.
Embodiment 44. The method with the features of embodiment 43, wherein rotating the sifter plate further comprises:
   driving a ratcheting arm engaged with a ring gear coupled to the sifter plate in order to rotate the sifter plate through at least a partial rotation.
Embodiment 45. The method with the features of embodiment 43, wherein the sifter plate includes an outer peripheral edge portion defining an outer peripheral edge that is larger than a bottom end of the storage container, and the method further comprises:
   forcing the flow of fluidized adhesive solids to move horizontally along the sifter plate before the flow of fluidized adhesive solids accesses the at least one aperture or the outer peripheral edge of the sifter plate.
Embodiment 46. The method with the features of embodiment 45, wherein the sifter plate includes at least one scoop-shaped block positioned over the at least one aperture and including a top plate that is spaced above the at least one aperture, and forcing the flow of fluidized adhesive solids to move horizontally further comprises:
   blocking the flow of fluidized adhesive solids from entering the at least one aperture until the sifter plate rotates and moves the flow of fluidized adhesive solids horizontally between the sifter plate and the top plate.
Embodiment 47. The method with the features of embodiment 45, wherein the fill system further includes a sidewall extension projecting outwardly and downwardly from the storage container so as to define a gap between the outer peripheral edge portion and the sidewall extension, and forcing the flow of fluidized adhesive solids to move horizontally further comprises:
   blocking adhesive solids flowing at an angle of repose for the adhesive solids from moving over the outer peripheral edge until the sifter plate rotates and moves the flow of fluidized adhesive solids horizontally through the gap.

While the present invention has been illustrated by a description of exemplary embodiments and while these embodiments have been described in some detail, it is not the intention of the Applicants to restrict or in any way limit the scope of the appended claims to such detail. Additional advantages and modifications will readily appear to those skilled in the art. The various features of the invention may be used alone or in any combination depending on the needs and preferences of the user. This has been a description of the present invention, along with the preferred methods of practicing the present invention as currently known. However, the invention itself should only be defined by the appended claims. What is claimed is:

## Claims

1. A fill system configured to retain and transfer adhesive solids to an adhesive melter, the fill system comprising:
a storage container for containing a bulk supply of adhesive solids;
a separating element positioned proximate to said storage container and configured to engage at least one surface of the bulk supply and move relative to the at least one surface to cause separation of adhesive solids from the bulk supply and produce a flow of fluidized adhesive solids from said storage container;
a drive (80) coupled to at least one of said storage container or said separating element, said drive operable to create the relative motion between said separating element and the at least one surface of the bulk supply, wherein the flow of fluidized adhesive solids stops exiting said storage container when said drive stops creating the relative motion between said separating element and the at least one surface of the bulk supply.

2. The fill system of claim 1, wherein said storage container includes at least one sidewall extending between a top opening and a bottom end, and said at least one sidewall is formed from or coated with a friction reducing material facing towards the bulk supply of adhesive solids, and/or said at least one sidewall is angled slightly outwardly such that said top opening is smaller than said bottom end of said storage container.

3. The fill system of claim 1, further comprising:
a pump inlet chamber communicating with said storage container and configured to receive the flow of fluidized adhesive solids that has been separated from the bulk supply by said separating element; and
at least one pump communicating with said pump inlet chamber and configured to remove the flow of fluidized adhesive solids from said pump inlet chamber and deliver the flow of fluidized adhesive solids to the adhesive melter.

4. The fill system of claim 3, wherein said pump inlet chamber includes a lower chamber portion adjacent to said at least one pump and an upper chamber portion extending between said lower chamber portion and said storage container, and the fill system further comprises:
a pump inlet clearing device associated with said pump inlet chamber and configured to keep said lower chamber portion clear of solidified masses formed by the flow of fluidized adhesive solids between operational cycles of said at least one pump.

5. The fill system of claim 4, wherein said pump inlet clearing device further comprises at least one of the following:
a cooling device operatively coupled to said pump inlet chamber so as to provide cooling energy to prevent the adhesive solids in said lower chamber portion from coalescing into solidified masses;
an agitation device associated with said pump inlet chamber and operative to remove the adhesive solids from said lower chamber portion by actuating a flow of the adhesive solids to the adhesive melter or back to said storage container;
a control valve located between said upper chamber portion and said lower chamber portion to selectively control flow of the adhesive solids into said lower chamber portion.

6. The fill system of claim 1, wherein:
said storage container includes a top opening, a bottom end, and at least one stationary sidewall extending between said top opening and said bottom end;
said separating element includes a sifter plate (30) positioned proximate to said bottom end of said storage container, said sifter plate including at least one aperture providing a flow path out of said storage container for the flow of fluidized adhesive solids; and
said drive (80) is configured to rotate said sifter plate to produce the relative motion of said sifter plate against the bulk supply, in particular a bottom surface of the bulk supply, of adhesive solids to generate the flow of fluidized adhesive solids, wherein in particular at least a portion of which moves out of said storage container through said at least one aperture for transfer to the adhesive melter.

7. The fill system of claim 6, wherein said sifter plate includes an outer peripheral edge portion that is larger in size than said bottom end of said storage container, and the fill system further comprises:
a sidewall extension projecting outwardly and downwardly from said at least one stationary sidewall at said bottom end so as to provide a gap between said outer peripheral edge portion of said sifter plate and said sidewall extension, the gap being sized to receive the flow of fluidized adhesive solids during the relative motion produced by said drive and sized to stop the flow of fluidized adhesive solids from exiting said storage container when said separating element stops moving relative to the bulk supply of adhesive solids.

8. The fill system of claim 6, wherein said sifter plate is a circular sifter disc; wherein said sifter disc preferably includes an outer peripheral edge portion that is larger in size than said bottom end of said storage container, and the fill system further comprises:
a sidewall extension projecting outwardly and downwardly from said at least one sidewall at said bottom end so as to provide a gap between said outer peripheral edge portion of said sifter disc and said sidewall extension, the gap being sized to receive at least a portion of the flow of fluidized adhesive solids moving out of said storage container during the relative motion produced by said sifter disc; , wherein preferably said outer peripheral edge portion and said gap define a gap angle through which the flow of fluidized adhesive solids must move to exit said storage container, the gap angle being less than an angle of repose defined by the adhesive solids so that the flow of fluidized adhesive solids from said storage container is stopped when said sifter disc stops rotating; , and/or further comprising:
a blocking member inserted into the gap between said outer peripheral edge portion and said sidewall extension, said blocking member preventing the flow of fluidized adhesive solids from exiting said storage container through the gap.

9. The fill system of claim 6, wherein said at least one aperture is positioned on said sifter plate to sift the bulk supply of adhesive solids evenly across the bottom surface of the bulk supply of adhesive solids.

10. The fill system of claim 6, wherein said at least one aperture in said sifter plate includes a plurality of elongate slots extending through said sifter plate;, wherein said sifter plate preferably comprises:
a plurality of scoop-shaped blocks, each positioned over at least one of said plurality of elongate slots and each including a top plate that is spaced above said respective elongate slots such that the flow of fluidized adhesive solids is forced to move horizontally through said scoop-shaped block to access said respective elongate slots, and wherein each of said scoop-shaped blocks preferably defines an opening and said top plate is sharpened at a leading edge adjacent to said opening to cut through the bulk supply of adhesive solids during rotation of said sifter plate.

11. The fill system of claim 6, wherein said sifter plate is at least partially perforated, preferably an entirety of said sifter plate is perforated, so as to define a plurality of apertures.

12. The fill system of claim 11, wherein said sifter plate includes a plurality of perforated inserts coupled to a remainder of said sifter plate so as to provide a generally planar sifting surface facing the bulk supply of adhesive solids., wherein said perforated inserts preferably are pie-piece shaped so as to sift the bulk supply of adhesive solids evenly across said sifting surface.

13. The fill system of claim 11, wherein each of said plurality of apertures is sized larger than an average diameter of the adhesive solids and smaller than twice an average diameter of the adhesive solids to enable the flow of fluidized adhesive solids through said plurality of apertures only during rotation of said sifter plate.

14. The fill system of claim 6, wherein said drive further comprises:
a ring gear coupled to said sifter plate; and
a ratcheting arm engaged with said ring gear and operative to drive said ring gear through a partial rotation to rotate said sifter plate;
and preferably an air cylinder coupled to said ratcheting arm and operative to push said ratcheting arm to drive said ring gear through the partial rotation; and
wherein said ratcheting arm preferably includes an engagement block having teeth configured to engaged said ring gear, said engagement block being spring-biased into engagement with said ring gear.

15. The fill system of claims 3, 4 and 6, wherein said pump inlet clearing device further comprises an eductor positioned adjacent to said at least one pump and configured to generate a compressed air jet that pushes adhesive solids into said at least one pump and out of said lower chamber portion.

16. The fill system of claim 6, wherein said at least one stationary sidewall defines a non-circular cross section to discourage unified bulk rotation of the bulk supply of adhesive solids.

17. A method of transferring adhesive solids to an adhesive melter with a fill system including a storage container, a separating element, and a drive coupled to at least one of the storage container or the separating element, the method comprising:
storing a bulk supply of adhesive solids within the storage container;
engaging the separating element with at least one surface of the bulk supply of adhesive solids;
moving at least one of the storage container or the separating element with the drive to produce relative motion between the separating element and the at least one surface of the bulk supply, the relative motion separating adhesive solids from the bulk supply to generate a flow of fluidized adhesive solids that moves out of the storage container; and
stopping the relative motion produced with the drive to stop the flow of fluidized adhesive solids out of the storage container.

18. The method of claim 17, wherein the fill system also includes a pump inlet chamber communicating with the storage container and at least one pump communicating with the pump inlet chamber, and moving at least one of the storage container or the separating element further comprises:
supplying the flow of fluidized adhesive solids that moves out of the storage container into the pump inlet chamber; and
removing the flow of fluidized adhesive solids in the pump inlet chamber with the at least one pump to deliver the adhesive solids to the adhesive melter, wherein the adhesive solids are supplied on demand to the at least one pump, thereby maintaining the pump inlet chamber clear of adhesive solids between operating cycles of the at least one pump.

19. The method of claim 18, further comprising:
clearing the pump inlet chamber between operating cycles of the at least one pump to prevent coalesced solidified masses of the adhesive solids from developing; wherein clearing the pump inlet chamber preferably comprises:
cooling the adhesive solids located in the pump inlet chamber between operating cycles of the at least one pump to prevent the adhesive solids from coalescing into solidified masses proximate the at least one pump; and/or
agitating the adhesive solids located in the pump inlet chamber between operating cycles of the at least one pump to prevent the adhesive solids from coalescing into solidified masses proximate the at least one pump, wherein agitating the adhesive solids preferably comprises:
removing the adhesive solids from the pump inlet chamber by actuating a flow of the adhesive solids to the adhesive melter or back to the storage container.

20. The method of claim 18, wherein the pump inlet chamber includes a lower chamber portion adjacent to the at least one pump and an upper chamber portion extending between the lower chamber portion and the storage container, and clearing the pump inlet chamber further comprises:
selectively controlling flow of the adhesive solids into the lower chamber portion with a control valve located between the upper chamber portion and the lower chamber portion,
wherein the sifter plate includes an outer peripheral edge portion defining an outer peripheral edge that is larger than a bottom end of the storage container, and the method further comprises:
forcing the flow of fluidized adhesive solids to move horizontally along the sifter plate before the flow of fluidized adhesive solids accesses the at least one aperture or the outer peripheral edge of the sifter plate; wherein the sifter plate preferably includes at least one scoop-shaped block positioned over the at least one aperture and including a top plate that is spaced above the at least one aperture, and forcing the flow of fluidized adhesive solids to move horizontally further comprises:
blocking the flow of fluidized adhesive solids from entering the at least one aperture until the sifter plate rotates and moves the flow of fluidized adhesive solids horizontally between the sifter plate and the top plate; and/or
wherein the fill system further includes a sidewall extension projecting outwardly and downwardly from the storage container so as to define a gap between the outer peripheral edge portion and the sidewall extension, and forcing the flow of fluidized adhesive solids to move horizontally further comprises:
blocking adhesive solids flowing at an angle of repose for the adhesive solids from moving over the outer peripheral edge until the sifter plate rotates and moves the flow of fluidized adhesive solids horizontally through the gap.
